# EUROPEAN PATENT SPECIFICATION

(11) **EP 3 333 501 B1**
(45) Date of publication and mention of the grant of the patent: **03.02.2021**
(21) Application number: 16203277.5
(22) Date of filing: 09.12.2016
(51) Int. Cl.: F24S 10/70, F24S 20/66, F24S 20/64, F24S 80/20, F24S 20/69

(54) **FLUID CONDUIT SYSTEM**
FLUIDLEITUNGSSYSTEM
SYSTÈME DE CONDUIT DE FLUIDE

(43) Date of publication of application: 13.06.2018
(73) Proprietor: Wagner, Grigorij, 14612 Falkensee (DE)
(72) Inventor: Wagner, Grigorij, 14612 Falkensee (DE)
(74) Representative: Dickerson, David

(56) References cited:
- EP-A1- 2 192 359
- WO-A1-2015/071019
- WO-A1-2015/122828
- WO-A1-2015/188291
- GB-A- 2 446 819
- US-A1- 2012 017 525

## Description

### BACKGROUND OF THE DISCLOSURE

### FIELD OF THE DISCLOSURE

The present disclosure relates to a fluid conduit system and to a method of assembling a fluid conduit system.

### DESCRIPTION OF THE RELATED ART

A wide variety of manifolds and fluid conduit systems are known to the prior art, *e.g.* for guiding fluids engines, heating systems, etc.

EP 2 192 359 A1 discloses a fluid conduit system comprising a fluid conduit system according to the preamble of claim 1-

The present disclosure expounds upon this background.

### SUMMARY OF THE PRESENT DISCLOSURE

The aim of the present summary is to facilitate understanding of the present disclosure. The summary thus presents concepts and features of the present disclosure in a more simplified form and in looser terms than the detailed description below and should not be taken as limiting other portions of the present disclosure.

Loosely speaking, the present disclosure teaches a fluid conduit system comprising a plurality of (floor / wall) panels manufacturable by extrusion, *e.g.* of a recycled plastic material, at least some of which panels comprise fluid conduits that extend from end to end through the respective panels. The fluid conduit system comprises manifolds at respective ends of the (floor / wall) panels, *i.e.* at respective ends of the fluid conduits, which manifolds define various fluid paths through the fluid conduits. At the same time, the manifolds may serve to mechanically connect a plurality of individual panels.

Such a fluid conduit system may serve as low-cost outdoor flooring that doubles as a solar heating system.

Other objects, advantages and embodiments of the present disclosure will become apparent from the detailed description below, especially when considered in conjunction with the accompanying drawings.

### BRIEF DESCRIPTION OF THE DRAWINGS

The Figures show:
- Fig. 1: a (widthwise) cross-section through an embodiment of a panel in accordance with the present disclosure;
- Fig. 2: a schematic (widthwise) cross-section through an embodiment of a panel in accordance with the present disclosure;
- Fig. 3: a schematic (widthwise) cross-section through an embodiment of a panel in accordance with the present disclosure;
- Fig. 4: a schematic (widthwise) cross-section through an embodiment of a panel in accordance with the present disclosure comprising a snap lock engagement mechanism;
- Fig. 5: a schematic, perspective view of an embodiment of a panel in accordance with the present disclosure;
- Fig. 6A: a schematic (widthwise) cross-section through a plurality of panels arranged on a surface in accordance with the present disclosure;
- Fig. 6B: a schematic (widthwise) cross-section through a plurality of panels during a process of assembling a fluid conduit system in accordance with the present disclosure;
- Fig. 7A and 7B: a schematic depiction of assembly of extruded products in accordance with the present disclosure;
- Fig. 8A: a schematic (widthwise) cross-section through an embodiment of a panel in accordance with the present disclosure;
- Figs. 8B and 8C: a schematic depiction of engagement of the panel of Fig. 8A with another panel;
- Fig. 9A: a schematic (widthwise) cross-section through an embodiment of a panel in accordance with the present disclosure;
- Fig. 9B: a schematic depiction of the panel of Fig. 9A in partial engagement with another panel;
- Fig. 10A: a schematic (widthwise) cross-section through an embodiment of a panel in accordance with the present disclosure;
- Fig. 10B: a schematic depiction of the panel of Fig. 10A in partial engagement with another panel;
- Fig. 11A: a schematic (widthwise) cross-section through an embodiment of a panel in accordance with the present disclosure;
- Fig. 11B: a schematic depiction of engagement of the panel of Fig. 11A with another panel;
- Figs. 11C and 11D: a schematic depiction of further features of the panel of Fig. 8A;
- Fig. 12A: a schematic, perspective depiction of an embodiment of a manifold in accordance with the present disclosure;
- Fig. 12B: a schematic side plan depiction of the manifold of Fig. 12A;
- Fig. 13: a schematic depiction of an embodiment of a manifold in accordance with the present disclosure;
- Fig. 14: a schematic depiction of an embodiment of a manifold in accordance with the present disclosure;
- Fig. 15: a schematic depiction of an embodiment of a manifold in accordance with the present disclosure;
- Fig. 16: a schematic depiction of an embodiment of a manifold in accordance with the present disclosure;
- Fig. 17: a schematic depiction of an embodiment of a manifold in accordance with the present disclosure;
- Fig. 18: a schematic depiction of an embodiment of a manifold in accordance with the present disclosure;
- Fig. 19: a schematic depiction of an embodiment of a fluid conduit system in accordance with the present disclosure;
- Fig. 20: a schematic depiction of an embodiment of a fluid conduit system in accordance with the present disclosure;
- Fig. 21: a schematic depiction of an embodiment of a manifold in accordance with the present disclosure; and
- Figs 22A and 22B: a schematic (widthwise) cross-section through an embodiment of a fluid conduit system in accordance with the present disclosure.

### DETAILED DESCRIPTION

The various embodiments of the present disclosure and of the claimed invention, in terms of both structure and operation, will be best understood from the following detailed description, especially when considered in conjunction with the accompanying drawings.

Before elucidating the embodiments shown in the Figures, the various embodiments of the present disclosure will first be described in general terms.

The present disclosure teaches a manifold. The manifold may comprise a plurality of ports, *e.g.* in the range of 4 to 20 ports or in the range of 4 to 10 ports. Any of the plurality of ports may be in fluid connection with any other of the plurality of ports. *(An elucidation of the term "any" is given in the closing paragraphs of this specification.)* The fluid connection between any of the plurality of ports may be via an internal chamber of the manifold. For example, (a chamber of) any of the plurality of ports may open directly into (a chamber of) any other of the plurality of ports. Any of the ports may act as a (fluid) inlet and/or as a (fluid) outlet. For example, any of the ports may act as an inlet and/or as an outlet for any internal chamber of the manifold.

The manifold may be a unitary element. Similarly, the manifold may comprise / consist of multiple parts. The manifold may be of a material that is (substantially) impervious to water. Similarly, any of the parts constituting the manifold may be of a material that is (substantially) impervious to water. For example, the manifold (or any parts thereof) may be manufactured of any (*e.g.* one, at least two or each) of a plastic material, a recycled plastic material, a rubber material, a wood plastic composite and a (glass) fiber reinforced plastic composite. The manifold may comprise at least one gasket / seal, *e.g.* at least one gasket / seal that inhibits a leak of fluid from any internal chamber of the manifold (to an ambient environment (of the manifold)), for example a leak at an interface of parts constituting the manifold. The at least one gasket / seal may be a rubber gasket / seal or manufactured of another elastomer.

Any of the plurality of ports may comprise port walls, *e.g.* walls of any of an inlet, an outlet, a passage or a chamber of the (respective) port. Any of the (respective) port walls of any of the plurality of ports may form a (respective) cylindrical structure, *e.g.* a (substantially) cylindrical structure having a (linear) cylinder axis. The cylinder axis may pass through a geometric midpoint of at least one rectangular bounding box bounding an outer periphery of the (respective) cylindrical structure. The cylindrical structure may have a (substantially) constant cross-section. The cross-section may be a circular cross-section, a rectangular cross-section, a rounded-rectangular cross-section, or other cross-section. The cross-section may be a cross-section in a (respective) plane perpendicular to the cylinder axis at respective points along the cylinder axis. Any of the port walls of any (respective) port may extend in a first direction. The cylinder axis of any of the cylindrical structures may extend in the first direction. Similarly, any of the port walls of any (respective) port may extend in a second direction, and the cylinder axis of any of the cylindrical structures may extend in the second direction. The second direction may be anti-parallel to the first direction.

The plurality of ports may comprise a first plurality of ports. Similarly, the plurality of ports may comprise a second plurality of ports. Any of the first plurality of ports may be in (direct) fluid communication with any of the second plurality of ports. For example, each respective one of the first plurality of ports may be in (direct) fluid communication exclusively with a respective one of the second plurality of ports.

Each of the first plurality of ports may have port walls that form a (respective) cylindrical structure having a (linear) cylinder axis in the first direction. Similarly, each of the second plurality of ports may have port walls that form a (respective) cylindrical structure having a (linear) cylinder axis in the second direction. The plurality of ports may comprise a first main port. Similarly, the plurality of ports may comprise a second main port. The first main port may have port walls that form a cylindrical structure having a (linear) cylinder axis in a third direction perpendicular to the first direction and/or the second direction. Similarly, the second main port may have port walls that form a cylindrical structure having a (linear) cylinder axis in the third direction or in a fourth direction perpendicular to the first direction and/or the second direction. The fourth direction may be anti-parallel to the third direction. The cylinder axes of any cylindrical structures formed by port walls of any of the plurality of ports may lie in a common plane. The first plurality of ports and, optionally, any of the first main port and the second main port may constitute the sole ports of the manifold. Similarly, the first plurality of ports and the second plurality of ports and, optionally, any of the first main port and the second main port may constitute the sole ports of the manifold. Any of the ports may comprise at least one ridge, *e.g.* around an outer circumference (of a cylindrical structure) of the (respective) port. The ridge may protrude by 0.5 to 2 mm from an adjacent region of the port.

The manifold may have a length in the range of 30 cm to 400 cm. Similarly, the manifold may have a length of at least 30 cm, of at least 50 cm or of at least 100 cm. The manifold may have a length of less than 400 cm. The manifold may have a width, *e.g.* as measured in a direction perpendicular to the length, in the range of 10 cm to 40 cm. The manifold may have a height, *e.g.* as measured in a direction perpendicular to both the length and the width, in the range of 5 cm to 15 cm. Any of the length, width and height may be measured between sides of a rectangular cuboid bounding box enclosing the manifold, *e.g.* between a respective side of the bounding box and a respectively opposite side of the bounding box in a direction perpendicular to the respective side. The length may be measured in a direction parallel to the third direction. The width may be measured in a direction parallel to the first direction.

Any of the cylindrical structures (formed by port walls of any of the plurality of ports) may have a length, *e.g.* as measured in a direction of the cylinder axis, in the range of 5 cm to 15 cm. Any of the cylindrical structures may have a width, *e.g.* as measured in a direction perpendicular to the length, in the range of 3 cm to 20 cm. Any of the cylindrical structures may have a height, *e.g.* as measured in a direction perpendicular to both the length and the width, in the range of 3 cm to 15 cm. The width and/or height may be measured between sides of a rectangular bounding box bounding an outer periphery of the (respective) cylindrical structure.

The manifold may comprise at least one distribution chamber. Any of the plurality of ports may be in (direct) fluid communication with at least one of the at least one distribution chamber. For example, the manifold may comprise a first distribution chamber, the first main port and the first plurality of ports being in (direct) fluid communication with the first distribution chamber. Similarly, the manifold may comprise a first distribution chamber and a second distribution chamber, the first main port and a first collection of ports belonging to the first plurality of ports being in (direct) fluid communication with the first distribution chamber and the second main port and a second collection of ports belonging to the first plurality of ports being in (direct) fluid communication with the second distribution chamber. Likewise, the manifold may comprise a first distribution chamber and a second distribution chamber, the first main port and the first plurality of ports being in (direct) fluid communication with the first distribution chamber, and the second main port and the second plurality of ports being in (direct) fluid communication with the second distribution chamber.

The manifold may comprise at least one (planar) abutment surface, *e.g.* for interfacing with (a (planar) surface of) a panel (of a fluid conduit system). Similarly, the manifold may comprise at least one attachment portion (comprising such at least one (planar) abutment surface). The attachment portion / abutment surface may comprise at least one (fastener) opening, *e.g.* for passage of a fastening device that fastens the manifold to another element such as a panel (of a fluid conduit system). Any of the at least one (planar) abutment surface may be / lie in a (first) imaginary plane. Similarly, any other of the at least one (planar) abutment surface may be / lie in a (second) imaginary plane. The first imaginary plane and/or the second imaginary plane may be parallel to the (aforementioned) third direction and may be perpendicular to the (aforementioned) first direction. As such, the second imaginary plane may be parallel to the first imaginary plane. The first imaginary plane may be offset from the second imaginary plane by a distance in the range of 5 mm to 20 cm. The first imaginary plane may be (located / positioned) at a first side of (any of) the at least one distribution chamber. Similarly, the second imaginary plane may be (located / positioned) at a second side of (any of) the at least one distribution chamber, *e.g.* at a side (of the (respective) at least one distribution chamber) opposite the first side.

The manifold may comprise at least one bridge portion that (rigidly) connects at least two other elements of the manifold. For example, the bridge portion may (rigidly) connect any of the at least one attachment portion and any of the at least one distribution chamber.

The manifold may comprise a cover. The cover may comprise a first major surface. The first major surface may be termed a cover surface. Similarly, the cover may comprise at least one (second) major surface on a side of the cover opposite the first major surface. The first major surface may be a (substantially) planar surface. The at least one (second) major surface may be shaped to abuttingly rest on any, *e.g.* on at least two, of the at least one attachment portion. The cover may be shaped such that the first major surface is perpendicular to any of the at least one (planar) abutment surface when the at least one (second) major surface is abuttingly resting on the aforementioned any of the at least one attachment portion. The cover may comprise at least one fastener. The fastener may be shaped to (snappingly) engage another portion of the manifold, *e.g.* to fasten the cover to a remainder of the manifold. For example, the fastener may be shaped to (snappingly) engage (a fastening structure of) at least one of the at least one attachment portion, the at least one distribution chamber, the at least one port and the at least one bridge portion. Any of the at least one attachment portion may comprise a groove that engages any of the at least one fastener.

The present disclosure teaches a fluid conduit system. The fluid conduit system comprises at least one manifold, *e.g.* a manifold as disclosed elsewhere in the present disclosure. *(Hereinafter, the term "the manifold" will be used in lieu of "any of the at least one manifold" for the sake of readability.)*

The fluid conduit system comprises at least one panel. The at least one panel may comprise a first plurality of panels and a second plurality of panels. Any of the at least one panel may be a flooring component, for example a flooring component as disclosed in WO 2015/071019 A1. *(Hereinafter, the term "the panel" will be used in lieu of "any of the at least one panel" for the sake of readability.)* The panel has a constant cross-section, *e.g.* across a length of the panel. For example, the constant cross-section may extend (lengthwise) from a first side of the (respective) panel to a second side of the (respective) panel opposite the first side. The first and second sides may be sides that define a length of the respective panel. As such, the first and second sides may be on opposite sides of a length of the panel. The cross-section may be determined in a plane perpendicular to a line across a length of the panel, the plane intersecting any point on the line. The panel may be of a material that is (substantially) impervious to water. Various possible embodiments of the panel will be discussed in greater detail *infra.*

The fluid conduit system comprises a plurality of conduits. Each of the conduits extends through a respective panel, *e.g.* across a length of the respective panel. Any of the conduits may comprise a (respective) first opening in the first side of the respective panel and a (respective) second opening in the second side of the respective panel opposite the first side. The conduit may comprise a fluid passage that connects the first and second openings. The walls of the passage may be (substantially) impervious to water. The first and second openings may be the sole openings, *i.e.* the sole inlet / outlet, of the fluid passage. The panel comprises a first plurality of conduits. Any of the conduits may have a regularly shaped cross-section, *e.g.* a polygonal cross-section. Similarly, any of the conduits may have an irregularly shaped cross-section. Any of the conduits may have selected from the group consisting of a circular cross-section, an elliptic / oval cross-section, a rectangular cross-section, a hexagonal cross-section and an octangular cross-section. Any corner of any of the conduits may be rounded. Thus, for example, any of the conduits may have a rounded rectangular cross-section or a rounded hexagonal cross-section.

Any of the at least one panel may be arranged in parallel. For example, any of the at least one panel may be arranged such that edges of the (respective) panels are parallel. Similarly, any of the at least one panel may be arranged such that (respective) conduits (belonging to the plurality of conduits) extending through the (respective) panels are parallel. The manifold may (be engaged with / fastened to the panel so as to) inhibit motion of any of the at least one panel, *e.g.* in a direction perpendicular to a length of the panel and/or in a direction parallel to a major surface of the panel. Any of the at least one panel may be arranged such that a major surface of the (respective) panel(s) is coplanar with a major surface of any other of the panels. The manifold may be shaped / dimensioned such that the cover surface is coplanar with a major surface of any of the panels (when the manifold is engaged with / fastened to the respective panels).

The first side of the panel may have a planar surface. Similarly, the second side of the panel may have a planar surface. An entirety of the first / second side excepting openings therein may be planar. A plurality of the at least one panel, *e.g.* the first / second plurality of panels, may be arranged such that the first side of the (respective) panels forms a (common) planar surface. Similarly, a plurality of the at least one panel, *e.g.* the first / second plurality of panels, may be arranged such that the second side of the (respective) panels forms a (common) planar surface.

The panel and/or the manifold may be arranged such that, for at least one port of the manifold, (the cylindrical structure of) the (respective) port extends into a (respective) conduit of the (respective) panel. The (respective) port / cylindrical structure may (matingly) engage and/or form a (watertight) fluid connection with the (respective) conduit. *(Hereinafter, for the sake of readability, the expression of a port* / *cylindrical structure "extending into" a conduit will be used in lieu of "extends into* / *engages* / *forms a (watertight) fluid connection with.")* An outer shape of the (respective) port / cylindrical structure may match an inner shape of the (respective) conduit. The match may be to within a dimensional tolerance of less than two millimeters, less than one millimeter, or less than half a millimeter on each side. Similarly, the match may be such that the (respective) port / cylindrical structure forms a watertight fluid connection with the (respective) conduit. Any of the ports / cylindrical structures of the panel may comprise at least one seal, *e.g.* an O-ring, on an outer periphery of the (respective) port / cylindrical structure. The seal may bridge a gap / tolerance between the outer shape of the (respective) port / cylindrical structure and the inner shape of the (respective) conduit. The panel and/or the manifold may be arranged such that, for any of the at least one manifold, at least one port / cylindrical structure of the (respective) manifold extends into a (respective) conduit of one of the at least one panel and at least one other port / cylindrical structure of the (respective) manifold engages a (respective) conduit of another of the at least one panel. More generally, the panel and/or the manifold may be arranged such that ports / cylindrical structures of any one of the at least one manifold extend into / engage conduits of at least two of the at least one panel.

The panel and/or the manifold may be arranged such that the first side of the (respective) panel abuts an abutment surface, *e.g.* as described above, of at least one (respective) manifold. The fluid conduit system may comprise at least one gasket, *e.g.* a gasket that seals a (respective) interface of (any portion of) the first side of any panel abutting an abutment surface and (a corresponding portion of) the respective abutment surface. As such, the gasket may provide a (watertight) seal between at least one conduit (of the fluid conduit system) and at least one port of at least one manifold (of the fluid conduit system).

The first plurality of panels may be arranged such that each first side of the first plurality of panels abuts a first abutment surface of a first manifold. The first abutment surface may be / lie in a (first) imaginary plane (associated with the first manifold, *e.g.* as described above). Similarly, the second plurality of panels may be arranged such that each second side of the second plurality of panels abuts a second abutment surface of a first manifold. The second abutment surface may be / lie in a (second) imaginary plane (associated with the first manifold, *e.g.* as described above). The first plurality of panels may be arranged such that each second side of the first plurality of panels abuts an abutment surface of a second manifold, and the second plurality of panels may be arranged such that each first side of the second plurality of panels abuts an abutment surface of a third manifold.

The panel may comprise at least one bore. An arrangement of any of the at least one bore may match an arrangement of any of the (aforementioned) at least one opening in an attachment portion / abutment surface of the manifold. Any of the at least one bore may extend through an entire length of the (respective) panel and/or extend into the (respective) panel in a direction parallel to any of the plurality of conduits in the (respective) panel. The fluid conduit system may comprise at least one fastening device, *e.g.* a screw or bolt, that extends through a (respective) opening in an attachment portion / abutment surface of a manifold (of the fluid conduit system) and into a (respective) bore of a panel (of the fluid conduit system).

The fluid conduit system may comprise at least one cover. Any of the at least one cover may cover (at least a portion of) any of the at least one manifold. Any of the at least one cover may comprise a major surface coplanar to a major surface of any of the at least one panel (of the fluid conduit system), *e.g.* to at least one panel adjacent to a manifold covered by the cover. The cover may comprise a (snap-lock) fastening mechanism, *e.g.* a (snap-lock) fastening mechanism that (snap-lock) fastens to at least one manifold (of the fluid conduit system).

The present disclosure teaches a method of assembling a fluid conduit system. The method comprises positioning at least one panel, *e.g.* a panel as disclosed elsewhere in the present disclosure, on a surface. The surface is an exterior wall of a building. The fluid conduit system may cover at least 60%, at least 80% or at least 95% of at least one exterior wall of a building (excluding windows). The fluid conduit system may constitute an exterior decorative element of a building. The fluid conduit system may be of a color selected from the group consisting of red, green, blue and yellow. At least the first side of any panel of the fluid conduit system may be of a color selected from the group consisting of red, green, blue and yellow. Any manifold of the fluid conduit system may be of a color selected from the group consisting of red, green, blue and yellow. Any manifold of the fluid conduit system may be of the same color as the first side of any panel of the fluid conduit system.

The method comprises assembling at least one manifold, *e.g.* a manifold as disclosed elsewhere in the present disclosure, in fluid connection with at least one conduit of the at least one panel. The assembling may comprise inserting each of at least one port of the at least one manifold into a (respective) conduit of the at least one panel.

The present disclosure teaches a method of altering a temperature of a fluid. The method comprises using a fluid conduit system, *e.g.* a fluid conduit system as disclosed elsewhere in the present disclosure, as a heat exchanger.

The following paragraphs describe further details of the panel and thus apply to any panel of the present disclosure. The first, second and third general descriptions that follow describe many features of the panel redundantly, albeit in different words for the sake of fuller explanation and better understanding. Accordingly, the teachings of any of the first, second and third general descriptions are to be understood as being equally applicable, *mutatis mutandis,* to the teachings of any others of the first, second and third general descriptions, in particular where the respective teachings relate to the same features, regardless of the differences in specific language. Furthermore, as explicitly noted below, the general remarks of the section entitled "Further general remarks about the panel" apply to any panel of the present disclosure.

### First general description of the panel

The panel has the form of a tile or pallet having a first engagement structure at a first edge of the panel and a second engagement structure at a second, (diagonally) opposite edge of the panel. The first engagement structure and the second engagement structure are provided at diagonally opposite portions of the panel.

The first and second engagement structures may be structured and arranged such that engagement / disengagement of the first engagement structure and the second engagement structure of another such panel is effectible (only) in a direction in a range of ±10°, ±30° or ±45° of perpendicular to a major face of the panel. For example, one of the first and second engagement structures may comprise a male structure, *e.g.* having a shape of a ridge or knob, and the other of the first and second engagement structures may comprise a female structure, *e.g.* having a counterpart shape of a groove or hole. As such, the male structure may be termed a "protruding structure" and the female structure may be termed a "hollow structure." Any of the male / female structures may protrude / form a recess in a direction (substantially) perpendicular to the major face of the panel. Any of the male / female structures may be provided on / in a (downward / upward facing) surface constituting a portion of a major face of the panel. Any of the male / female structures may be spaced from the first / second edge of the panel, *e.g.* spaced inwardly from the first / second edge in a direction of the other of the first / second edge.

As used in this specification, the term "face" may be understood in the sense of a "side," *i.e.* in the sense of one or more surfaces that form a "side" of an object, *e.g.* of the panel. For example, in the case of an ivory die with black eyes, the die could be deemed as having six sides or "faces," each face having a planar ivory surface and between one and six curved black surfaces forming the respective eyes.

The first and second engagement structures may be structured and arranged such that the first engagement structure engages the second engagement structure of another panel when the panel and the other panel are arranged such that a minor face at / proximate to the first edge of the panel is adjacent to / abuts a minor face at / proximate to the second edge of the other panel and (a major surface of) a major face of the panel and (a major surface of) a major face of the other panel are coplanar.

The first engagement structure may be a counterpart of the second engagement structure, *e.g.* in the sense that the first engagement structure has a structure that is an equal opposite of the second engagement structure. Similarly, the first engagement structure may be a counterpart of the second engagement structure in the sense that a male structure of either of the first and second engagement structures has a structure that, *e.g.* in maximal engagement with the other of the first and second engagement structures, would occupy at least 60%, at least 70%, at least 80% or at least 90% of a female structure of the other of the first and second engagement structures.

Further details of the panel may be taken from the following descriptions that, as will be readily apparent and distinguishable to the skilled reader, rely on alternative nomenclature to describe some aspects of the panel.

### Second general description of the panel

The panel of the present disclosure, *e.g.* as described in the first general description *supra,* may likewise be described in terms of a panel comprising a first overlap portion and a second overlap portion.

The panel comprises a first major face and a second major face opposite the first major face. The panel may be a six-faced body comprising the first major face, the second major face and four minor faces. The first major face may comprise or define a first major surface, and the second major face may comprise or define a second major surface. One or each of the first and second major surfaces may be a (substantially) planar surface, *e.g.* a surface that fits entirely between two parallel planes separated by no more than 5 cm, 10 cm or 15 cm, for example. The first and second major surfaces may be (substantially) parallel. The panel may comprise one or more rounded or beveled corners.

The panel has the form of a tile or pallet and has a first overlap portion at a first edge of the panel and a second overlap portion at a second, (diagonally) opposite edge of the panel. The first overlap portion and the second overlap portion are provided at diagonally opposite portions of the panel. The peripheral outline of the panel has substantially a shape of a rectangular cuboid excepting the first overlap portion and the second overlap portion.

The first overlap portion may be structured to overlap and engage the second overlap portion of another such panel, *e.g.* when the panel and the other panel are arranged such that a minor face at / proximate to the first edge of the panel is adjacent to / abuts a minor face at / proximate to the second edge (of the other panel and (a major surface of) a major face of the panel and (a major surface of) a major face of the other panel are coplanar. The first overlap portion may have a cross-section that is a counterpart of a cross-section of the second overlap portion, *e.g.* along a planar cross-section through the first and second overlap portions perpendicular to a major face of the panel or to both a major and a minor face of the panel.

The first overlap portion and the second overlap portion form counterparts of an engagement mechanism that inhibits lateral motion of the panel away from the other panel when the first overlap portion of the panel overlaps the second overlap portion of the other panel, for example as described above. The engagement mechanism may be a snap lock engagement mechanism and may inhibit vertical motion of the panel away from the other panel. In the present context, lateral motion may be understood as motion in a direction substantially parallel to a major face of the panel and vertical motion may be understood as motion in a direction substantially perpendicular to a major face of the panel. The present disclosure also uses the term "engagement structure" to designate the respective structures constituting the counterparts of the engagement mechanism.

One of the first and second overlap portions may comprise a male structure, *e.g.* having a shape of a ridge or knob, and the other of the first and second overlap portions may comprise a female structure, *e.g.* having a counterpart shape of a groove or hole. As such, the male structure may be termed a "protruding structure" and the female structure may be termed a "hollow structure." The male structure may have a shape that matingly engages the female structure. Similarly, the male structure may have a shape that snappingly engages the female structure. The male structure and the female structure may form the engagement mechanism counterparts, *i.e.* an engagement mechanism counterpart pair. The first overlap portion and the second overlap portion may comprise a plurality of such engagement mechanism counterpart pairs. The plurality of engagement mechanism counterpart pairs may comprise engagement mechanism counterparts implementing differing engagement mechanisms. Each of the male / female structures may have a minimum dimension in a widthwise and/or lengthwise direction of the panel, *e.g.* as defined below, of at least one sixth or at least one fourth of a dimension of the respective first / second overlap portion in the widthwise direction of the panel. Each of the male / female structures may have a maximum dimension in a widthwise and/or lengthwise direction of the panel, *e.g.* as defined below, of no more than one third or no more than one half of a dimension of the respective first / second overlap portion in the widthwise direction of the panel.

The first overlap portion may comprise a first face. The first face may be on a side of the first overlap portion opposite a side of first overlap portion that defines a portion of a major face of the panel. The first face may face in a direction perpendicular to a major face of the panel. For example, the first face may be an upward-facing face (that faces in an upward direction) or a downward-facing face (that faces in a downward direction). The engagement mechanism counterpart formed by the first overlap portion may be formed on the first face.

Similarly, the second overlap portion may comprise a second face. The second face may be on a side of the second overlap portion opposite a side of the second overlap portion that defines a portion of a(nother) major face of the panel. The first and second faces may face in opposite directions. As such, the second face may face in a direction perpendicular to a(nother) major face of the panel and may be an upward-facing face (that faces in an upward direction) or a downward-facing face (that faces in a downward direction). For example, the second face may be an upward-facing face if the first face is a downward-facing face or a downward-facing face if the first face is an upward-facing face. The engagement mechanism counterpart formed by the second overlap portion may be formed on the second face.

The first overlap portion and the second overlap portion may be formed such that engagement / disengagement of the engagement mechanism counterparts is effectible (only) in a direction in a range of ±10°, ±30° or ±45° of perpendicular to a major face of the panel. For example, the male / female structure may protrude / form a recess in a direction (substantially) perpendicular to a major face of the panel.

The first overlap portion and the second overlap portion may be formed such that the first overlap portion of one panel is engageable / disengageable from the second overlap portion of another panel by a single pivotal motion of the one panel around an axis proximate to the second overlap portion of the one panel.

The male structure may be offset from an edge / side of the respective first / second overlap portion comprising the male structure distal from the other of the first / second overlap portions. For example, the male structure may be distanced from an (outermost) edge / side of the panel in a generally inward direction along a width of the panel, *e.g.* as defined below. The male structure may be offset / distanced from the aforementioned edge / side by at least 10% or at least 20% of a width of a first / second face, as described above, on which the male structure is formed. The male structure may be offset / distanced from the aforementioned edge / side by not more than 40%, not more than 50% or not more than 60% of a width of a first / second face, as described above, onto which the male structure is formed. The width of the first / second face may be measured in a direction of a width of the panel, *e.g.* as defined below. The remarks of this paragraph apply, *mutatis mutandis,* to the female structure.

As discussed in further detail *infra,* the panel may be shaped such that, when an engagement structure of the panel is engaged with a (counterpart) engagement structure of another (such) panel, a gap is provided between a major surface of the panel and a (substantially) coplanar major surface of the other panel. For example, the engagement structure (*e.g.* a male / female structure) may be offset / distanced from an inner-lying minor lateral surface of the panel by at least 8 mm, at least 10 mm, at least 15 mm or at least 20 mm more than a counterpart engagement structure (*e.g.* a counterpart female / male structure) is offset / distanced from an opposite, outer-lying minor lateral surface of the panel. The inner-lying minor lateral surface may be a surface intermediate / interconnecting a major surface of the panel and the first face of the first overlap portion, and the outer-lying minor lateral surface may be a surface intermediate / interconnecting said major surface and the second face of the second overlap portion.

The first overlap portion may extend along at least 50%, at least 80% or an entirety of the first edge. Similarly, the second overlap portion may extend along at least 50%, at least 80% or an entirety of the second edge.

The panel may have a thickness in the range of 3 cm to 15 cm, *e.g.* in the range of 4 to 10 cm. The thickness may be measured from a first major face of the panel to a second major face of the panel, *e.g.* in a region of maximum distance / thickness from the first major face to the second major face in a direction perpendicular to the first major face. Similarly, the thickness may be measured from a major side of a rectangular cuboid bounding box enclosing the panel to an opposite major side of the bounding box in a direction perpendicular to the major sides.

The panel may have a length in the range of 1 m to 30 m. The length may be measured in a direction perpendicular to the thickness. For example, the length may be measured from a (distal) surface of a minor face of the panel that extends across the panel from the first overlap portion to the second overlap portion to a (distal) surface of an opposite minor face of the panel that likewise extends across the panel from the first overlap portion to the second overlap portion. Similarly, the length may be measured from a first minor side of a rectangular cuboid bounding box enclosing the panel to a second, opposite minor side of the bounding box in a direction perpendicular to the first / second minor side, where each of the first and second minor sides is a side adjacent to the panel from the first overlap portion to the second overlap portion.

The panel may have a width, e.g. as measured in a direction perpendicular to both the thickness and the length, in the range of 15 cm to 300 cm. For example, the width may be measured from a surface of a minor face of the panel distal from the first overlap portion to a surface of an opposite minor face of the panel distal from the second overlap portion or from a first minor side of a rectangular cuboid bounding box enclosing the panel to a second, opposite minor side of the bounding box in a direction perpendicular to the first / second minor sides, where the first minor side is a side adjacent solely to the first overlap portion and the second minor side is a side adjacent solely to the second overlap portion.

One or both of the first overlap portion and the second overlap portion may have a maximal thickness of less than 80% of a thickness of the panel and may have a minimal thickness of at least 20% of a thickness of the panel, *e.g.* as defined *supra.* Similarly, one or both of the first overlap portion and the second overlap portion may have a maximal thickness of less than 70% of a thickness of the panel and may have a minimal thickness of at least 30% of a thickness of the panel. Similarly, one or both of the first overlap portion and the second overlap portion may have a maximal thickness of less than 60% of a thickness of the panel and may have a minimal thickness of at least 40% of a thickness of the panel. The maximal / minimal thickness of the first / second overlap portion may be measured in direction parallel to a thickness (direction) of the panel, *e.g.* as defined *supra,* and may be measured at a location of the male / female structure.

The first overlap portion and the second overlap portion may be formed such that at least 50%, at least 80% or at least 90% of the first face of the first overlap portion of the panel abuts the second face of the second overlap portion of the other panel when the first overlap portion of the panel overlaps the second overlap portion of the other panel, for example as described above. The first and/or second overlap portion may be formed such that at least 50%, at least 60% or at least 75% of an area of the first / second face is located in a central third or in a central fifth (of a thickness) of the panel, *e.g.* as defined *supra.*

The first / second overlap portion may have a width in a widthwise direction of the panel that differs from the width of the other of the first / second overlap portion in a widthwise direction of the panel, *e.g.* by an amount (substantially) equal to a dimension of the aforementioned gap (*e.g.* as measured in a widthwise direction of the panel). In other words, the respective widths of the first / second overlap portions may differ by at least 8 mm, at least 10 mm, at least 15 mm or at least 20 mm.

The first face may have a surface having a shape that is a counterpart of a shape of a surface of the second face. For example, an entire surface of the first face may have a shape that is a counterpart shape of an entire surface of the second face. A sum of a thickness of the first overlap portion and a (counterpart) thickness of the second overlap portion may (substantially) equal a thickness of the panel, *e.g.* when the first overlap portion of the panel overlaps / engages the second overlap portion of another panel, for example as described above. In the present context, a "thickness" and "counterpart thickness" pair may be understood as respective thicknesses measured through neighboring points on adjacent surfaces of the first / second overlap portions when the first overlap portion of the panel overlaps / engages the second overlap portion of another panel as described above. In the present context, "(substantially) equal" may be understood as being equal, as being equal to within 5% (of the larger value) or as being equal to within 10% (of the larger value). The above equation may hold for a plurality of measurement points on the first / second face, *e.g.* for at least 80%, at least 90% or an entirety of an area of the first / second face. The thickness of the first overlap portion may be a distance from a portion of the major face of the panel defined by the first overlap portion to the first face. Similarly, the thickness of the first overlap portion may be a distance from a plane defined by the major face of the panel to the first face. The thickness of the second overlap portion may be a distance from a portion of the major face of the panel defined by the second overlap portion to the second face. Similarly, the thickness of the second overlap portion may be a distance from a plane defined by another major face of the panel to the second face. The thickness of the first / second overlap portion may be measured in direction parallel to a thickness (direction) of the panel, *e.g.* as defined *supra.*

Design of the panel as described above enables the first overlap portion of one panel to be engageable / disengageable from the second overlap portion of another panel by a single pivotal motion of the one panel around an axis proximate to the second overlap portion of the one panel, *e.g.* an axis intersecting / collinear with a (corner) edge of the panel (most) distal / diagonally opposite from first overlap portion. Similarly, design of the panel as described above enables the second overlap portion of one panel to be engageable / disengageable from the first overlap portion of another panel by a single pivotal motion of the one panel around an axis proximate to the first overlap portion of the one panel, *e.g.* an axis intersecting / collinear with a (corner) edge of the panel (most) distal / diagonally opposite from second overlap portion. The axis may extend in a lengthwise direction of the panel, *e.g.* in a direction perpendicular, in a range of ±10° of perpendicular or in a range of ±20° of perpendicular to a minor lateral side of a bounding box enclosing the panel. The engagement / disengagement may comprise engagement / disengagement of male / female structures of the first / second overlap portions and/or engagement / disengagement of counterparts of an engagement mechanism defined by the first / second overlap portions.

### Third general description of the panel

The panel of the present disclosure, *e.g.* as described in the first or second general description *supra,* may likewise be described in terms of a panel comprising a first recessed portion and a second recessed portion.

The panel comprises a first major face and a second major face opposite the first major face. The panel may be a six-faced body comprising the first major face, the second major face and four minor faces. The first major face may comprise or define a first major surface, and the second major face may comprise or define a second major surface. One or each of the first and second major surfaces may be a (substantially) planar surface, *e.g.* a surface that fits entirely between two parallel planes separated by no more than 5 cm, 10 cm or 15 cm, for example. The first and second major surfaces may be (substantially) parallel. The panel may comprise one or more rounded or beveled corners.

A peripheral outline of the panel has substantially a shape of a rectangular cuboid excepting a first recessed portion along a first edge of the first major surface and a second recessed portion along a second edge of the second major surface diagonally opposite the first edge. In other words, the panel comprises first / second recessed portions at diagonally opposite edges / corners of the panel. The first and second recessed portions may constitute / define / shape a hollowed-out volume, *e.g.* a recess, cutout, slit, groove, hole, channel, etc., at the respective edge of the respective major surface of the panel. The boundary surface defining the interface of the first / second recessed portions and the panel may have a complex shape, *e.g.* for defining counterparts of an engagement mechanism as discussed *infra.* The boundary surface may be complex in the sense that it comprises (a plurality of) both concave and convex portions. Notwithstanding the first and second recessed portions, the panel may have the form of a tile, slab or pallet.

The first recessed portion and the second recessed portion may be structured such that a portion of the panel shaped by the first recessed portion overlaps and engages a portion of another such panel shaped by the second recessed portion of the other panel, *e.g.* when the panel and the other panel are arranged such that a minor face at / proximate to the first edge of the panel is adjacent to / abuts a minor face at / proximate to the second edge of the other panel and the first major face of the panel and the second major face of the other panel are coplanar.

The first recessed portion has a cross-section that is a counterpart of a cross-section of the second recessed portion, *e.g.* along a planar cross-section through the first and second recessed portions perpendicular to a major face or to both a major and a minor face of the panel. One or both of the first and second recessed portions may have substantially a shape of a rectangular cuboid excepting portions / structures that define counterparts of an engagement mechanism, *e.g.* as discussed *infra.*

The first recessed portion and the second recessed portion define counterparts of an engagement mechanism that inhibits lateral motion of the panel away from another panel when the first recessed portion is in counterpart engagement with the second recessed portion of the other panel, *e.g.* as described above. For example, the first recessed portion and the second recessed portion may be structured such that a portion of the panel shaped by the first recessed portion and a portion of the panel shaped by the second recessed portion form counterparts of an engagement mechanism in the panel, *e.g.* of an engagement mechanism that inhibits lateral motion of the panel away from another panel when the portion of the panel shaped by the first recessed portion engages the portion of another such panel shaped by the second recessed portion of the other panel, for example as described above. The engagement mechanism may be a snap lock engagement mechanism and may inhibit vertical motion of the panel away from the other panel. In the present context, lateral motion may be understood as motion in a direction substantially parallel to a major face of the panel and vertical motion may be understood as motion in a direction substantially perpendicular to a major face of the panel.

One of the first and second recessed portions may define a male structure on the panel, *e.g.* a structure having a shape of a ridge or knob, and the other of the first and second recessed portions may define a female structure into the panel, *e.g.* a structure having a counterpart shape of a groove or hole. As such, the male structure may be termed a "protruding structure" and the female structure may be termed a "hollow structure." The male structure may have a shape that matingly engages the female structure. Similarly, the male structure may have a shape that snappingly engages the female structure. The male structure and the female structure may form the engagement mechanism counterparts, *i.e.* an engagement mechanism counterpart pair. The first recessed portion and the second recessed portion may define a plurality of such engagement mechanism counterpart pairs on / in the panel. The plurality of engagement mechanism counterpart pairs may comprise engagement mechanism counterparts implementing differing engagement mechanisms. Each of the male / female structures may have a minimum dimension in a widthwise and/or lengthwise direction of the panel, *e.g.* as defined below, of at least one sixth or at least one fourth of a dimension of the respective first / second recessed portion in the widthwise direction of the panel. Each of the male / female structures may have a maximum dimension in a widthwise and/or lengthwise direction of the panel, *e.g.* as defined below, of no more than one third or no more than one half of a dimension of the respective first / second recessed portion in the widthwise direction of the panel.

The first recessed portion may define a first recessed region in the first major face. The engagement mechanism counterpart shaped into the panel by the first recessed portion may be shaped into / onto the first recessed region. Similarly, the second recessed portion may define a second recessed region in the second major face. The engagement mechanism counterpart shaped into the panel by the second recessed portion may be shaped into / onto the second recessed region.

The first recessed portion and the second recessed portion may be structured such that engagement / disengagement of the engagement mechanism counterparts shaped by the first and second recessed portions is effectible (only) in a direction in a range of ±10°, ±30° or ±45° of perpendicular to a major face of the panel. For example, the male / female structure may protrude / form a recess in a direction (substantially) perpendicular to a major face of the panel.

The male structure may be distanced from an (outermost) edge / side of the panel in a generally inward direction along a width of the panel, *e.g.* as defined below. The male structure may be offset / distanced from the aforementioned edge / side by at least 10% or at least 20% of a width of a first / second recessed region, as described above, onto which the male structure is formed. The male structure may be offset / distanced from the aforementioned edge / side by not more than 40%, not more than 50% or not more than 60% of a width of a first / second recessed region, as described above, onto which the male structure is formed. The width of the first / second recessed region may be measured in a direction of a width of the panel, *e.g.* as defined below. The remarks of this paragraph apply, *mutatis mutandis,* to the female structure.

The panel may have a thickness in the range of 3 cm to 15 cm, *e.g.* in the range of 4 to 10 cm. The thickness of the panel may be measured from the first major face of the panel to the second major face of the panel, *e.g.* in a region of maximum distance / thickness from the first major face to the second major face in a direction perpendicular to the first major face. Similarly, the thickness may be measured from a major side of a rectangular cuboid bounding box enclosing the panel to an opposite major side of the bounding box in a direction perpendicular to the major sides.

The panel may have a length in the range of 1 m to 30 m. The length may be measured in a direction perpendicular to the thickness. For example, the length may be measured from a (distal) surface of a minor face of the panel that extends from the first recessed portion to the second recessed portion to a (distal) surface of an opposite minor face of the panel that likewise extends from the first recessed portion to the second recessed portion. Similarly, the length may be measured from a first minor side of a rectangular cuboid bounding box enclosing the panel to a second, opposite minor side of the bounding box in a direction perpendicular to the minor sides, where each of the first minor side and the second minor side is a side adjacent to both the first recessed portion and the second recessed portion.

The panel may have a width, *e.g.* as measured in a direction perpendicular to both the thickness and the length, in the range of 15 cm to 300 cm. For example, the width may be measured from a surface of a minor face of the panel distal from the first recessed portion to a surface of an opposite minor face of the panel distal from the second recessed portion or from a first minor side of a rectangular cuboid bounding box enclosing the panel to a second, opposite minor side of the bounding box in a direction perpendicular to the minor sides, where the first minor side is a side adjacent solely to the first recessed portion and the second minor side is a side adjacent solely to the second recessed portion.

As discussed in further detail *infra,* the panel may be shaped such that, when an engagement structure of the panel is engaged with a (counterpart) engagement structure of another (such) panel, a gap is provided between a major surface of the panel and a (substantially) coplanar major surface of the other panel. For example, the engagement structure (*e.g.* a male / female structure) may be offset / distanced from an inner-lying minor lateral surface of the panel by at least 8 mm, at least 10 mm, at least 15 mm or at least 20 mm more than a counterpart engagement structure (*e.g.* a counterpart female / male structure) is offset / distanced from an opposite, outer-lying minor lateral surface of the panel. The inner-lying minor lateral surface may be a surface intermediate / interconnecting a major surface of a major face of the panel and a minor surface of said major face in the first recessed region, and the outer-lying minor lateral surface may be a surface intermediate / interconnecting said major surface and a minor surface in the second recessed region (opposite said major surface).

The first recessed portion may extend along at least 50%, at least 80% or an entirety of the first edge. Similarly, the second recessed portion may extend along at least 50%, at least 80% or an entirety of the second edge. The first recessed portion may occupy / extend over less than 30%, less than 20%, less than 10% or less than 5% of the width of the panel. Similarly, the second recessed portion may occupy / extend over less than 30%, less than 20%, less than 10% or less than 5% of the width of the panel. One or both of the first recessed portion and the second recessed portion may extend to a depth of / occupy at least 20% and at most 80% of a thickness of the panel. Similarly, one or both of the first recessed portion and the second recessed portion may extend to a depth of / occupy at least 30% and at most 70% of a thickness of the panel. Similarly, one or both of the first recessed portion and the second recessed portion may extend to a depth of / occupy at least 40% and at most 60% of a thickness of the panel.

The first recessed portion and the second recessed portion may be structured such that at least 50%, at least 80% or at least 90% of the first recessed region of the panel abuts the second recessed region of the other panel when a portion of the panel shaped by the first recessed portion overlaps and engages a portion of the other panel shaped by the second recessed portion of the other panel, for example as described above. The first recessed portion and the second recessed portion may be structured such that at least 50%, at least 60% or at least 75% of an area of the first / second recessed region is located in a central third or in a central fifth (of a thickness) of the panel, *e.g.* as defined *supra.*

The first / second recessed portion may have a width in a widthwise direction of the panel that differs from the width of the other of the first / second recessed portion in a widthwise direction of the panel, *e.g.* by an amount (substantially) equal to a dimension of the aforementioned gap (*e.g.* as measured in a widthwise direction of the panel). In other words, the respective widths of the first / second recessed portions may differ by at least 8 mm, at least 10 mm, at least 15 mm or at least 20 mm. For example, the first recessed portion may extend away from the (aforementioned) first edge of the first major surface in a direction of the (aforementioned) second edge of the second major surface by at least 8 mm, at least 10 mm, at least 15 mm or at least 20 mm farther than the second recessed portion extends away from the second edge in a direction of the first edge.

The first recessed region may have a surface having a shape that is a counterpart of a shape of a surface of the second recessed region. For example, an entire surface of the first recessed region may have a shape that is a counterpart shape of an entire surface of the second recessed region. A sum of a thickness of the panel at the first recessed region and a (counterpart) thickness of the panel at the second recessed region may (substantially) equal a thickness of the panel, *e.g.* when a portion of the panel shaped by the first recessed portion overlaps and engages a portion of another panel shaped by the second recessed portion of the other panel, for example as described above. In the present context, a "thickness" and "counterpart thickness" pair may be understood as respective thicknesses measured through neighboring points on adjacent surfaces of the first / second recessed region when a portion of the panel shaped by the first recessed portion overlaps and engages a portion of another panel shaped by the second recessed portion of another panel as described above. In the present context, "(substantially) equal" may be understood as being equal, as being equal to within 5% (of the larger value) or as being equal to within 10% (of the larger value). The above equation may hold for a plurality of measurement points on the first / second recessed region, *e.g.* for at least 80%, at least 90% or an entirety of an area of the first / second recessed region. The thickness of the panel at the first recessed region may be a distance from (a surface of) the first recessed region to a portion of the second major face opposite the first recessed portion. Similarly, the thickness of the panel at the first recessed region may be a distance from a plane defined by the second major face to (a surface of) the first recessed portion. The thickness of the panel at the second recessed region may be a distance from (a surface of) the second recessed region to a portion of the first major face opposite the second recessed portion. Similarly, the thickness of the panel at the second recessed region may be a distance from a plane defined by the first major face to (a surface of) the second recessed portion. The thickness may be measured in direction parallel to a thickness (direction) of the panel, *e.g.* as defined *supra.*

Design of the panel as described above enables counterparts of an engagement mechanism defined by the first recessed portion and the second recessed portion to be engageable / disengageable by a single pivotal motion of the one panel around an axis proximate to the second recessed portion of the one panel, *e.g.* an axis intersecting / collinear with a (corner) edge of the panel (most) distal / diagonally opposite from first recessed portion. Similarly, design of the panel as described above enables counterparts of an engagement mechanism defined by the first recessed portion and the second recessed portion to be engageable / disengageable by a single pivotal motion of the one panel around an axis proximate to the first recessed portion of the one panel, *e.g.* an axis intersecting / collinear with a (corner) edge of the panel (most) distal / diagonally opposite from second recessed portion. The axis may extend in a lengthwise direction of the panel, *e.g.* in a direction perpendicular, in a range of ±10° of perpendicular or in a range of ±20° of perpendicular to a minor lateral side of a bounding box enclosing the panel. The engagement / disengagement may comprise engagement / disengagement of male / female structures and/or of counterparts of an engagement mechanism defined by the first / second recessed portions.

### Further general remarks about the panel

The general remarks of this section apply to any panel of the present disclosure.

The ratio of thickness to width of the panel may be in the range of 1:3 to 1:30. The ratio of length to width may be in the range of 1:4 to 4:1. Similarly, the ratio of width to length may be in the range of 1:1 to 1:100.

The first / second major surface may constitute a (lower) surface that abuts the floor / the ground when the panel is laid on a floor / the ground with other such panels to form flooring / decking. Similarly, the other of the first / second major surface may constitute a(n upper) flooring / decking surface when the panel is laid on the floor / the ground with other such panels to form flooring / decking.

One or each of the first and second major surfaces may be a contiguous surface. One or each of the first and second major surfaces may be a surface that constitutes an entirety of the respective first / second major face of the panel. Similarly, one or each of the first and second major surfaces may be a disjointed surface, *i.e.* be defined by a plurality of disjointed surfaces. For example, the panel may comprise a plurality of grooves (in the first / second major face) that disjoin neighboring regions of the first / second major surface. The grooves may be formed and arranged to channel dirt and/or liquids away from the first / second major surface.

One or each of the first and second major surfaces may extend (in a first direction) an entire distance from a first side of the panel to a second side of the panel opposite the first side of the panel. Similarly, one or each of the first and second major surfaces may extend (in a second direction perpendicular to the first direction) an entire distance from a third side of the panel to a fourth side of the panel opposite the third side of the panel.

The panel may comprise a resilient portion, *e.g.* in a region of (the male / female structure of) the engagement mechanism or in a region of the (aforementioned) first / second engagement structure. For the sake of succinctness, the following discussion of the resilient portion uses the term "engagement structure" to designate the (respective) first engagement structure / second engagement structure / male structure / female structure.

In the present context, the expression "in a region" may be understood in the sense that a (deforming) portion or an entirety of the resilient portion is less distant from the engagement structure than a (half / quarter) thickness of the panel, *e.g.* a thickness as described hereinbelow. Similarly, the expression "in a region" may be understood in the sense that a (deforming) portion or an entirety of the resilient portion is less distant from the engagement structure than a (half / quarter) width of the engagement structure, *i.e.* a dimension of the engagement structure in a widthwise (*e.g.* as described hereinbelow) direction of the panel.

In the present context, the expression "deforming portion" may be understood in the sense of a portion of the resilient portion that, during engagement / disengagement of the panel to / from another panel, is (temporarily / elastically) deformed by a counterpart engagement structure of the other panel. Engagement / disengagement of the panel to / from another panel may comprise / necessitate (temporarily / elastically) deforming (a deforming portion of) the resilient portion (by compression). The "resilience" of the resilient portion may encompass such an ability of the resilient portion to (temporarily / elastically) deform. In this respect, the engagement structure may use / be of a shape that uses the resilience of the resilient portion to (snappingly) engage / disengage from a counterpart engagement structure, e.g. of another panel, for example when the panel is pivoted to engage another panel as described *infra.* For example, the first recessed portion of a panel may be engageable to / disengageable from the second recessed portion of another panel by a resilience of the resilient portion (of the panel) and a (single) pivotal motion of the panel around an axis proximate to the second recessed portion (of the other panel).

The resilient portion may separate the engagement structure from a remainder of the panel. For example, the resilient portion may form a trench / U-shaped region between (a base of) the engagement structure and (an adjacent portion of) the panel. Furthermore, the resilient portion may constitute at least a portion of a surface of the engagement structure. For example, the resilient portion may constitute at least 30% or at least 50% of a surface of the engagement structure. The resilient portion may extend from a surface of the engagement structure to a depth of at least an eighth, a quarter or half of a width of the engagement structure, *i.e.* a dimension of the engagement structure in a widthwise (*e.g.* as described hereinbelow) direction of the panel. Similarly, the resilient portion may constitute an entirety of the engagement structure, *e.g.* an entirety of a structure projecting from the panel to form the engagement structure. The resilient portion may be shaped so as extend across less than 80% or less than 60% of the panel in a thickness direction.

As stated above, the engagement structure may use / be of a shape that uses the resilience of the resilient portion to (snappingly) engage / disengage from a counterpart engagement structure. The resilient portion may comprise / constitute a bulge, *e.g.* a dot-shaped, annular or linear bulge, of the engagement structure. The bulge may interact with (a bulge of) a counterpart engagement structure of another panel during engagement / disengagement of the panel to / from the other panel. The interaction may comprise a (temporary / elastic) deforming of the bulge (during the engagement / disengagement), *e.g.* by compression of the bulge by the other panel. Similarly, the bulge may engage (a corresponding hollow of) a counterpart engagement structure of another panel, *e.g.* to inhibit disengagement of the panel from the other panel and/or to provide the "snap" of the snap lock engagement mechanism. Engagement / disengagement of the panel to / from another panel may comprise / necessitate (temporarily / elastically) deforming the bulge.

The panel may be manufactured of any (*e.g.* one, at least two or each) of a plastic material, a recycled plastic material, a rubber material, a wood plastic composite and a (glass) fiber reinforced plastic composite. For example, the panel may be manufactured primarily of a recycled plastic material, comprising a rubber layer solely on a major face / surface, *e.g.* to improve grip. The panel may exhibit a constant cross-section along its width. The panel may be a solid structure, *i.e.* a structure without internal cavities. Similarly, the panel may comprise at least one (internal) cavity. For example, the panel may comprise at least one passage that extends in a lengthwise direction of the panel through an entirety of the panel, *i.e.* from a first end surface of the panel to a second end surface of the panel opposite the first end surface. The first and second end surfaces may be end surfaces that define a length of the panel. The passage may be a closed cavity except at the opposite (first and second) end surfaces of the panel. A wall of the passage adjacent a major face of the panel may be V-shaped, *e.g.* to facilitate fluid runoff. The V-shaped wall may be adjacent a major face opposite the major surface at which the (aforementioned) gap is provided. The passages may constitute between 25% and 75% of a volume of the panel. Any of the passages may (respectively) constitute a conduit of the fluid conduit system.

The panel may comprise / consist of a first material and a second material. For example, at least 60%, at least 80%, at least 90% or at least 95% of the panel may be of a first material, *e.g.* as measured by volume. The resilient portion may be of a second material, *e.g.* a material more pliable than the first material (at 20° C). An entirety of the panel excepting the resilient portion (in a region of the first / second engagement structure) may be of the first material. The first material may be a material selected from the group consisting of a plastic material and a composite material, where the plastic material may be a recycled plastic material and the composite material may comprise / consist of a plastic material and/or a recycled plastic material in combination with any material selected from the group consisting of wood, glass fibers and carbon fibers. The second material may be an elastomer.

The resilient portion may be integrally formed / integral with the panel, *e.g.* by coextrusion. For example, the resilient portion may be integrally formed / integral with the (aforementioned) first / second extending portion. The resilient portion may be integrally formed in / integral with the first material, *e.g.* by coextrusion. For example, the resilient portion may be formed by coextrusion of the (second) material constituting the resilient portion and the (first) material constituting the remainder of the panel.

The resilient portion may be distinct / separable from (the remainder of) the panel. Similarly, the resilient portion may be distinct / separable from the (first) material constituting the remainder of the panel. The panel may comprise a hollow / groove for receiving the resilient portion, *e.g.* a hollow / groove in the (aforementioned) first / second extending portion. The hollow / groove may extend an entire length of the panel. The panel and the resilient portion may comprise (counterpart) fastening structures, *e.g.* tongue and groove or barb and ledge, for (releasably) securing the resilient portion in (the hollow / groove of) the panel. A portion of the resilient portion may have a counterpart shape of the hollow / groove. For example, the resilient portion may consist of a first portion have a counterpart shape of the hollow / groove and a second (projecting) portion constituting an engagement structure of the panel. Similarly, the resilient portion may consist of a first portion having a shape that (snappingly) engages (a shape of) the hollow / groove and a second (projecting) portion constituting an engagement structure of the panel.

The resilient portion may be configured relative to the counterpart fastening and engagement structures of the panel to attach more securely to the counterpart fastening structure than to (a structure having the shape of) the counterpart engagement structure. In other words, the resilient portion (and the panel) may be configured such that, during disengagement of the panel from another panel, *e.g.* as described in the present disclosure, the resilient portion disengages from the other panel without becoming unfastened from (the counterpart fastening structure (formed by the hollow / groove of) the panel.

As touched upon above, any male structure may have a shape of a ridge or knob, and any female structure may have a (counterpart) shape of a groove or hole. For example, any male structure may be a protrusion having a (general) shape of a finger, a (right circular) cylinder or a rectangular cuboid, and any female structure may be a hollow having a (counterpart) shape of a finger, a (right circular) cylinder or a rectangular cuboid. Similarly, any of the male / female structures may have a shape of a tongue and groove, respectively.

Any of the male and female structures may comprise a resilient structure, e.g. a resilient structure that is resiliently dislocated by the other of the counterpart pair during an engaging / disengaging motion of the engagement mechanism counterparts relative to one another. The resilient dislocation may provide the "snap" of the snap lock engagement mechanism. Interaction of the resilient structures may prevent disengagement of a male structure from a counterpart female structure and may thus contribute to securing one panel to another panel (when in engagement). The resilience of the resilient structure may be provided by the material and/or the shape of the resilient structure. For example, the resilient structure may be a cantilever structure or a bulge, *e.g.* a dot-shaped, annular or linear bulge.

One or both faces of the panel at respective ends of the length of the panel may comprise a planar surface coplanar to a respective side of a (rectangular) bounding box enclosing the panel. An entirety of one or both (said) faces of the panel may be coplanar to the respective side of the bounding box.

The panel may be shaped such that, when an engagement structure of the panel is engaged with a (counterpart) engagement structure of another (such) panel, a gap is provided between a major surface of the panel and a (substantially) coplanar major surface of the other panel. The engagement structure may be a first / second engagement structure as described above. Similarly, the engagement structure may be a (male / female) structure of the engagement mechanism. The gap may have a minimum dimension of at least 8 mm, at least 10 mm, at least 15 mm or at least 20 mm, *e.g.* as measured from the major surface of the panel to the (substantially) coplanar major surface of the other panel. The gap may have a minimum dimension, *e.g.* as measured from the major surface of the panel to the (substantially) coplanar major surface of the other panel, within the range of 30% to 70%, *e.g.* within the range of 40% to 60%, of a thickness of the panel. The gap may have a depth, *e.g.* as measured in a thickness direction of the panel (from the major surface of the panel), of at least a quarter, at least a third or at least half of a thickness of the panel. The gap may extend in a thickness direction of the panel from the major surface of the panel to (a surface of) the other panel (when the engagement structure of the panel is engaged with the (counterpart) engagement structure of the other panel). The gap may extend along an entire length of the panel (when the engagement structure of the panel is engaged with the (counterpart) engagement structure of the other panel). The terms thickness and length may be understood as described *supra.*

The panel may comprise a (first) bevel that interconnects / at a corner of an outer-lying minor lateral surface of the panel and a minor face of the panel comprising an engagement structure. The (first) bevel may be of a shape and size for receiving a prying tool, *e.g.* a prying tool for disengaging the panel from another such panel, *i.e.* for prying the panel at the (first) bevel so as to disengage an engagement structure of the panel from a counterpart engagement structure of the other panel. The panel may comprise a (second) bevel that interconnects / at a corner of an inner-lying minor lateral surface of the panel and a major face of the panel. The first and second bevels may be at diagonally opposite corners of a groove formed by the gap.

The panel may comprise at least one (third) engagement structure in / at / on (one of) the first / second major surfaces. *(Hereinafter, the term "the (third) engagement structure" will be used in lieu of "any of the at least one (third) engagement structure" for the sake of readability.)* The (third) engagement structure may comprise a male structure, *e.g.* having a shape of a ridge or knob. Similarly, the (third) engagement structure may comprise a female structure, *e.g.* having a counterpart shape of a groove or hole. The panel may comprise a resilient portion, *e.g.* as defined hereinabove. The resilient portion may be located in a region of (the male / female structure of) the (third) engagement structure.

The present disclosure also relates to a mounting element, *e.g.* to a mounting element for a fluid conduit system. The fluid conduit system may comprise at least one mounting element. *(Hereinafter, the term "the mounting element" will be used in lieu of "any of the at least one mounting element" for the sake of readability.)* The mounting element may be an extruded product. As such, the mounting element may have a constant cross-section. The cross-section may be determined in a plane perpendicular to an axis of extrusion of the (respective) mounting element, the plane intersecting any point on the axis of extrusion. The mounting element may comprise a (plate-shaped) base portion.

The mounting element may have a length of at least 10 cm, where the length of the mounting element may be measured in a direction parallel to the axis of extrusion. Similarly, the mounting element may have a length of no more than 50 cm. The (plate-shaped) base portion may have a thickness of at least 5 mm, where the thickness may be measured in a direction perpendicular to a major face of the base portion. Similarly, the (plate-shaped) base portion may have a thickness of no more than 3 cm. The mounting element may have a width of at least 10 cm, where the width of the mounting element may be measured in a direction perpendicular to both the length and the thickness of the mounting element. Similarly, the mounting element may have a width of no more than 30 cm.

The mounting element may comprise at least one (fourth) engagement structure in / at / on (one of) the first / second major surfaces. *(Hereinafter, the term "the (fourth) engagement structure" will be used in lieu of "any of the at least one (fourth) engagement structure" for the sake of readability.)* The (fourth) engagement structure may comprise a male structure, *e.g.* having a shape of a ridge or knob. Similarly, the (fourth) engagement structure may comprise a female structure, *e.g.* having a counterpart shape of a groove or hole. The third and fourth engagement structures may constitute counterparts of an engagement mechanism. The (fourth) engagement structure may have a shape that (snappingly) engages a shape of the (third) engagement structure. The panel and the mounting element may be shaped such that each of at least two, at least three or at least four of the (fourth) engagement structures can individually engage a respective one of the (third) engagement structures simultaneously.

The (fourth) engagement structure may extend from the (plate-shaped) base portion by at least 2 cm, by at least 5 cm, by at least 10 cm or by at least 15 cm. The (fourth) engagement structure may extend from the (plate-shaped) base portion by no more than 5 cm, by no more than 10 cm or by no more than 20 cm. The panel and the mounting element may be shaped such that the first / second major surface in / at / on which the panel comprises the (third) engagement structure is distanced from the (plate-shaped) base portion by at least 2 cm, by at least 5 cm, by at least 10 cm or by at least 15 cm when the (third) engagement structure is engaged with the (fourth) engagement structure. Similarly, the panel and the mounting element may be shaped such that the first / second major surface in / at / on which the panel comprises the (third) engagement structure is distanced from the (plate-shaped) base portion by no more than 5 cm, by no more than 10 cm or by no more than 20 cm when the (third) engagement structure is engaged with the (fourth) engagement structure.

The mounting element may comprise a resilient portion. The resilient portion may be located in a region of (the male / female structure of) the (fourth) engagement structure.

In the present context, the expression "in a region" may be understood in the sense that a (deforming) portion or an entirety of the resilient portion is less distant from the engagement structure than a (half / quarter) thickness of the (plate-shaped) base portion, where the thickness may be measured in a direction perpendicular to a major face of the base portion. Similarly, the expression "in a region" may be understood in the sense that a (deforming) portion or an entirety of the resilient portion is less distant from the engagement structure than a (half / quarter) width of the engagement structure, where the width may be measured in a direction parallel to a major face of the base portion.

In the present context, the expression "deforming portion" may be understood in the sense of a portion of the resilient portion that, during engagement / disengagement of the mounting element to / from the panel, is (temporarily / elastically) deformed by a counterpart engagement structure. Engagement / disengagement of the mounting element to / from the panel may comprise / necessitate (temporarily / elastically) deforming (a deforming portion of) the resilient portion (by compression). The "resilience" of the resilient portion may encompass such an ability of the resilient portion to (temporarily / elastically) deform. In this respect, the engagement structure may use / be of a shape that uses the resilience of the resilient portion to (snappingly) engage / disengage from a counterpart engagement structure.

The resilient portion may separate the engagement structure from a remainder of the panel / mounting element. For example, the resilient portion may form a trench / U-shaped region between (a base of) the engagement structure and (an adjacent portion of) the panel / mounting element. Furthermore, the resilient portion may constitute at least a portion of a surface of the engagement structure. For example, the resilient portion may constitute at least 30% or at least 50% of a surface of the engagement structure. The resilient portion may extend from a surface of the engagement structure to a depth of at least an eighth, a quarter or half of a width of the engagement structure, *i.e.* a dimension of the engagement structure in a widthwise (*e.g.* as described *supra*) direction of the engagement structure. Similarly, the resilient portion may constitute an entirety of the engagement structure, *e.g.* an entirety of a structure projecting from the panel / mounting element to form the engagement structure. The resilient portion may be shaped so as extend across less than 80% or less than 60% of the panel in a thickness direction.

As stated above, the engagement structure may use / be of a shape that uses the resilience of the resilient portion to (snappingly) engage / disengage from a counterpart engagement structure. The resilient portion may comprise / constitute a bulge, *e.g.* a dot-shaped, annular or linear bulge, of the engagement structure. The bulge may interact with (a bulge of) a counterpart engagement structure during engagement / disengagement of the mounting element to / from the panel. The interaction may comprise a (temporary / elastic) deforming of the bulge (during the engagement / disengagement), *e.g.* by compression of the bulge by the counterpart panel / mounting element. Similarly, the bulge may engage (a corresponding hollow of) a counterpart engagement structure, *e.g.* to inhibit disengagement of the panel from the mounting element and/or to provide the "snap" of the snap lock engagement mechanism. Engagement / disengagement of the panel to / from the mounting element may comprise / necessitate (temporarily / elastically) deforming the bulge.

The mounting element may be manufactured of any (*e.g.* one, at least two or each) of a plastic material, a recycled plastic material, a rubber material, a wood plastic composite and a (glass) fiber reinforced plastic composite. The mounting element may be a solid structure, *i.e.* a structure without internal cavities.

The mounting element may comprise / consist of a first material and a second material. For example, at least 60%, at least 80%, at least 90% or at least 95% of the mounting element may be of a first material, *e.g.* as measured by volume. The resilient portion may be of a second material, *e.g.* a material more pliable than the first material (at 20° C). An entirety of the mounting element excepting the resilient portion (in a region of the fourth engagement structure) may be of the first material. The first material may be a material selected from the group consisting of a plastic material and a composite material, where the plastic material may be a recycled plastic material and the composite material may comprise / consist of a plastic material and/or a recycled plastic material in combination with any material selected from the group consisting of wood, glass fibers and carbon fibers. The second material may be an elastomer.

The resilient portion may be integrally formed / integral with the mounting element, *e.g.* by coextrusion. As such, the resilient portion may be integrally formed in / integral with the first material, *e.g.* by coextrusion. For example, the resilient portion may be formed by coextrusion of the (second) material constituting the resilient portion and the (first) material constituting the remainder of the mounting element.

The resilient portion may be distinct / separable from (the remainder of) the mounting element. Similarly, the resilient portion may be distinct / separable from the (first) material constituting the remainder of the mounting element. The mounting element may comprise a hollow / groove for receiving the resilient portion. The hollow / groove may extend an entire length of the mounting element. The mounting element and the resilient portion may comprise (counterpart) fastening structures, *e.g.* tongue and groove or barb and ledge, for (releasably) securing the resilient portion in (the hollow / groove of) the mounting element. A portion of the resilient portion may have a counterpart shape of the hollow / groove. For example, the resilient portion may consist of a first portion have a counterpart shape of the hollow / groove and a second (projecting) portion constituting an engagement structure of the mounting element. Similarly, the resilient portion may consist of a first portion having a shape that (snappingly) engages (a shape of) the hollow / groove and a second (projecting) portion constituting an engagement structure of the mounting element.

The resilient portion may be configured relative to the counterpart fastening and engagement structures of the mounting element to attach more securely to the counterpart fastening structure than to (a structure having the shape of) the counterpart engagement structure. In other words, the resilient portion (and the mounting element) may be configured such that, during disengagement of the mounting element from the panel, *e.g.* as described in the present disclosure, the resilient portion disengages from the panel without becoming unfastened from (the counterpart fastening structure (formed by the hollow / groove of) the mounting element.

Any of the male and female structures of the mounting element may comprise a resilient structure, *e.g.* a resilient structure that is resiliently dislocated by the other of the counterpart pair during an engaging / disengaging motion of the engagement mechanism counterparts relative to one another. The resilient dislocation may provide the "snap" of the snap lock engagement mechanism. Interaction of the resilient structures may prevent disengagement of a male structure from a counterpart female structure and may thus contribute to securing the panel to the mounting element (when in engagement). The resilience of the resilient structure may be provided by the material and/or the shape of the resilient structure. For example, the resilient structure may be a cantilever structure or a bulge, *e.g.* a dot-shaped, annular or linear bulge.

### The illustrated embodiments

The various embodiments of the present disclosure having been described above in general terms, the embodiments shown in the Figures will now be elucidated.

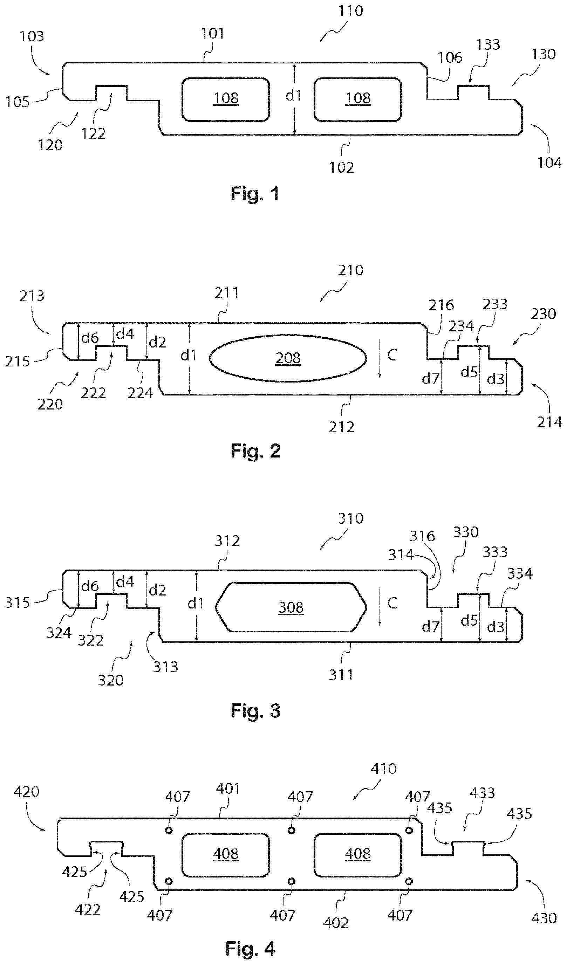

Figure 1 shows a schematic (widthwise) cross-section through an embodiment of a panel 110 in accordance with the present disclosure, *e.g.* as described in the first general description above.

In the illustrated embodiment, panel 110 has the form of a tile or pallet having a first engagement structure 120 at a first edge 103 of panel 110 and a second engagement structure 130 at a second, diagonally opposite edge 104 of panel 110. Panel 110 comprises two conduits 108 as well as a first major surface 101 and a second major surface 102 on opposite faces of panel 110, first major surface 101 and second major surface 102 defining a thickness d1 of panel 110. First engagement structure 120 comprises a female structure 122 and second engagement structure 130 comprises a male structure 133 that is a counterpart of female structure 122. In particular, first engagement structure 120 is structured and arranged to engage second engagement structure 130 of another panel 110 when panel 110 and the other panel 110 are arranged such that a minor face 105 at first edge 103 of panel 110 is adjacent to / abuts a minor face 106 proximate to second edge 104 of the other panel 110.

Figure 2 shows a schematic (widthwise) cross-section through an embodiment of a panel 210 in accordance with the present disclosure, *e.g.* as described in the second general description above.

In the illustrated embodiment, panel 210 has the form of a tile or pallet, panel 210 having a first overlap portion 220 at a first edge 213 of panel 210 and a second overlap portion 230 at a second, (diagonally) opposite edge 214 of panel 210. Panel 210 comprises an elliptical conduit 208 as well as a first major surface 211 and a second major surface 212 on opposite faces of panel body 210, first major surface 211 and second major surface 212 defining a thickness d1 of panel 210. First overlap portion 220 comprises a female structure 222 and second overlap portion 230 comprises a male structure 233 that is a counterpart of female structure 222. In particular, first overlap portion 220 is structured and arranged to engage second overlap portion 230 of another panel 210 when panel 210 and the other panel 210 are arranged such that a minor face 215 of panel 210 at first edge 213 of panel 210 is adjacent to / abuts a minor face 216 of panel 210 proximate to second edge 214 of panel 210 of the other panel 210.

First overlap portion 220 and second overlap portion 230 are shaped such that the sum of a thickness d2, d4, d6 of first overlap portion 220 as measured, in a thickness direction C of panel 210, from first major surface 211 to a first face 224 of first overlap portion 220 on a side of first overlap portion 220 opposite first major surface 211 and a counterpart thickness d3, d5, d7 of second overlap portion 230 as measured, in a thickness direction C of panel 210, from a second face 234 of second overlap portion 230 on a side of second overlap portion 230 opposite second major surface 212 to second major surface 212 (at a position counterpart to a position at which thickness d2, d4, d6 of first overlap portion 220 is measured if first overlap portion 220 and second overlap portion 230 were in engagement, *i.e.* thickness d2 being counterpart to thickness d3, thickness d4 being counterpart to thickness d5 and thickness d6 being counterpart to thickness d7) (substantially) equals thickness d1 of panel 210, *i.e.* are equal, are equal to within 5% (of the larger value) or are equal to within 10% (of the larger value).

Figure 3 shows a schematic (widthwise) cross-section through an embodiment of a panel 310 in accordance with the present disclosure, *e.g.* as described in the third general description above.

In the illustrated embodiment, panel 310 comprises a rounded hexagonal conduit 308 as well as a first major surface 311 and a second major surface 312 on opposite faces of panel 310, first major surface 311 and second major surface 312 defining a thickness d1 of panel 310. Panel 310 comprises a first recessed portion 320 at a first edge 313 of first major surface 311 and a second overlap portion 230 at a second, (diagonally) opposite edge 314 of second major surface 312.

First recessed portion 320 comprises a female structure 322 and second recessed portion 330 comprises a male structure 333 that is a counterpart of female structure 322. In particular, first recessed portion 220 is structured such that a portion of panel 310 shaped by first recessed portion 320 overlaps and engages a portion of another such panel 310 shaped by second recessed portion 330 of the other panel 310 when panel 310 and the other panel 310 are arranged such that a minor face 315 of panel 310 proximate to first edge 313 of panel 310 is adjacent to / abuts a minor face 316 of panel 310 at second edge 314 of panel 310 of the other panel 310.

First recessed portion 320 defines a first recessed region in first major face 311, and second recessed portion 330 defines a second recessed region in second major face 312. A sum of a thickness d2, d4, d6 of panel 310 at the first recessed region as measured, in a thickness direction C of panel 310, from second major surface 312 to a surface 324 of first recessed portion on a side of first recessed portion opposite second major surface 312 and a counterpart thickness d3, d5, d7 of panel 310 at the second recessed portion as measured, in a thickness direction C of panel 310, from a surface 334 of second recessed portion on a side of second recessed portion opposite first major surface 311 to first major surface 311 (at a position counterpart to a position at which thickness d2, d4, d6 of first recessed portion is measured if first recessed portion and second recessed portion were in engagement, *i.e.* thickness d2 being counterpart to thickness d3, thickness d4 being counterpart to thickness d5 and thickness d6 being counterpart to thickness d7) (substantially) equals thickness d1 of panel 310, *i.e.* are equal, are equal to within 5% (of the larger value) or are equal to within 10% (of the larger value).

Figure 4 shows a schematic (widthwise) cross-section through an embodiment of a panel 410 in accordance with the present disclosure comprising a snap lock engagement mechanism. In addition to provision of the snap lock engagement mechanism, panel 410 comprises features as shown in any of Figures 1 to 3.

In the illustrated embodiment, panel 410 comprises two conduits 408 as well as a first major surface 402, a second major surface 401, a first engagement structure 420 and a second engagement structure 430. Furthermore, panel 410 comprises a plurality of bores 407, *e.g.* for receiving (the shaft of) a fastener for fastening panel 410 to a manifold. First engagement structure 420 comprises a female structure 422 and second engagement structure 430 comprises a male structure 433 that is a counterpart of female structure 422. Male structure 433 and female structure 422 form counterparts of the snap lock engagement mechanism.

Female structure 422 comprises a resilient structure in the form of bulges 425 that narrow a portion of female structure 422. Similarly, male structure 433 comprises a resilient structure in the form of bulges 435 that widen a portion of male structure 433. Bulges 435 of male structure 433 are resiliently dislocated by bulges 425 of female structure 422 during an engaging / disengaging motion of male structure 433 and female structure 422 relative to one another, which resilient dislocation provides the "snap" of the snap lock engagement mechanism.

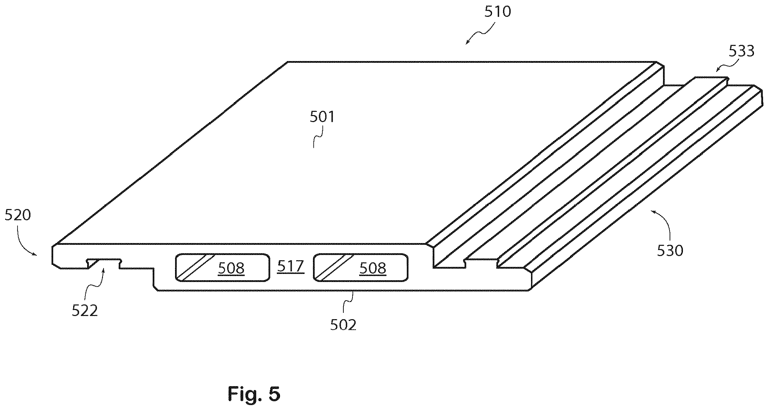

Figure 5 shows a schematic, perspective view of an embodiment of a panel 510 in accordance with the present disclosure, *e.g.* as shown in Figure 4.

In the illustrated embodiment, panel 510 comprises two conduits 508, a first major surface 501, a second major surface 502, a planar minor face 517, a first engagement structure 520 and a second engagement structure 530. First engagement structure 520 comprises a female structure 522, and second engagement structure 530 comprises a male structure 533 that is a counterpart of female structure 522, male structure 533 and female structure 522 forming counterparts of a snap lock engagement mechanism. Specifically, male structure 533 and female structure 522 are illustrated as comprising resilient bulges, *e.g.* as described above with reference to Figure 4. Planar minor face 517 and an opposite (planar) face of panel 510 not visible in the perspective view define a length of panel 510.

On account of its constant (widthwise) cross-section, panel 510 may be manufactured by extrusion, the extruded material being sectioned, *e.g.* along planar minor face 517, to define a length of panel 510.

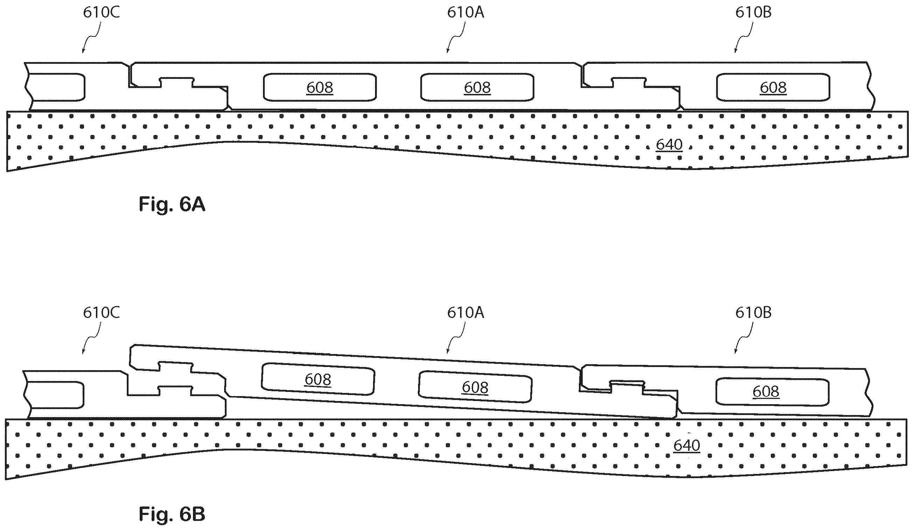

Figure 6A shows a schematic (widthwise) cross-section through a plurality of panels 610 arranged on a surface 640 to form flooring / decking in accordance with the present disclosure.

In the illustrated embodiment, a plurality of panels 610 are provided in abutting arrangement on a surface 640, *e.g.* on the ground or on a roof, to form decking and/or part of a fluid conduit system, a respective major surface of panels 610 lying essentially coplanar with surface 640.

A female structure in an engagement structure of panel 610A is in engagement with a male on an engagement structure of panel 610C, and a male structure on another engagement structure of panel 610A is in engagement with a female in an engagement structure of panel 610B.

Figure 6B shows a schematic (widthwise) cross-section through a plurality of panels 610 comprising conduits 608 during a process of assembling a fluid conduit system in accordance with the present disclosure.

The Figure depicts a panel 610A as it is pivoted (relative to a surface 640) around an axis proximate to an engagement structure of panel 610A that engages an engagement structure of panel 610C. In the Figure, the axis may be perpendicular to the plane of the paper sheet at a lower, right-hand corner of panel 610A.

As exemplified by the Figure, the fundamental design of panels 610 allows a single panel 610A to be removed from / inserted into an abutting arrangement of a plurality of such panels 610 on a surface 640 without laterally dislocating others of the plurality of panels 610. As shown in the Figure, panel 610C is not dislocated at all by pivoting of panel 610A into / from engagement with panel 610C, and panel 610B is only slightly by pivoting of panel 610A into / from engagement with panel 610B.

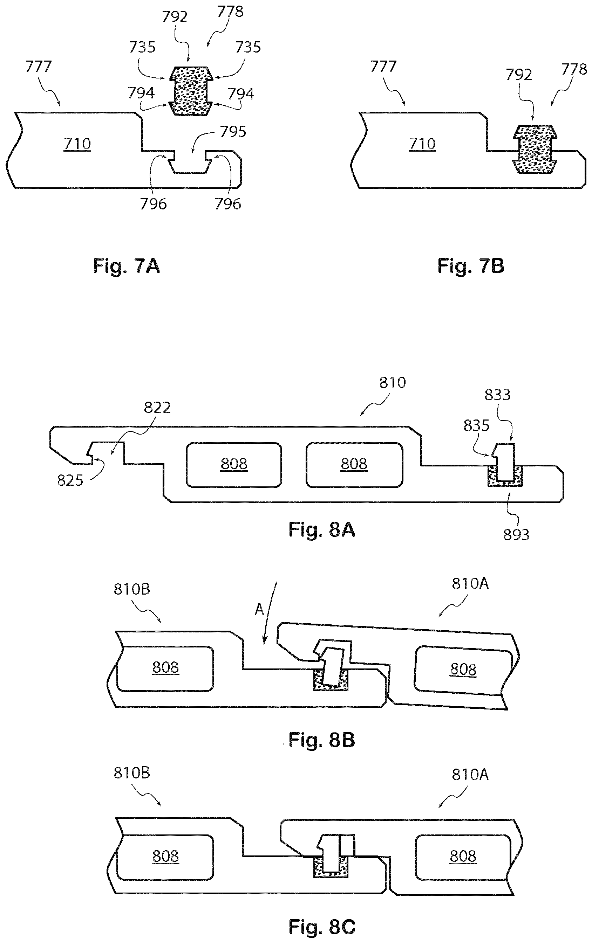

Figures 7A and 7B show a schematic depiction of assembly of extruded products in accordance with the present disclosure, *e.g.* as described above.

As shown in Figure 7A, a first extruded product 777 in the form of a panel 710 may be manufactured separately from a second extruded product 778 in the form of a resilient portion 792. In the illustrated embodiment, first extruded product 777 comprises a groove 795 configured to receive a portion of second extruded product 778. Furthermore, groove 795 comprises fastening structures 796 in the form of ledges that are configured to securingly engage fastening structures 794 in the form of barbs provided on second extruded product 778. Second extruded product 778 moreover comprises bulges 735 for engaging a counterpart structure of another panel 710. As reflected by the speckling of resilient portion 792 in the Figs. 7A and 7B, resilient portion 792 may be of a different, *e.g.* more pliable, material than panel 710, thus allowing resilient portion 792 to be pressed into groove 795, *i.e.* to (temporarily / elastically) deform and enter groove 795.

In the configuration shown in Figure 7B, second extruded product 778 has been assembled into groove 795 of first extruded product 777, *e.g.* by pressing second extruded product 778 into groove 795, barbs 794 of resilient portion 792 securing resilient portion 792 to panel 710 by virtue of engagement with ledges 796 of groove 795.

Figure 8A shows a schematic (widthwise) cross-section through an embodiment of a panel 810 in accordance with the present disclosure, *e.g.* as described above.

In the illustrated embodiment, panel 810 comprises conduits 808, an engagement structure in the form of a female structure 822, an engagement structure in the form of a male structure 833 and a resilient portion 893, resilient portion 893 forming a U-shaped region / trench between (a base of) male structure 833 and (an adjacent portion of) panel 810. Female structure 822 comprises a bulge 825 that narrows a portion of female structure 822. Similarly, male structure 833 comprises a bulge 835 that widens a portion of male structure 833. Panel 810, including resilient portion 893 and male structure 833, may be integrally formed, *e.g.* by coextrusion.

Figure 8B and 8C shows a schematic depiction of engagement of panel 810A of Figure 8A with another (such) panel 810B.

In the configuration illustrated in Figure 8B, female structure 822 of panel 810A is in partial engagement with male structure 833 of other panel 810B as panel 810A is pivoted (as represented by arc-shaped arrow A) relative to other panel 810B, (temporary / elastic) deformation of resilient portion 893 allowing bulge 835 of male structure 833 to be (temporarily / elastically) dislocated in response to collision with bulge 825 of female structure 822 due to the mutual shapes and relative motion of male structure 833 and female structure 822.

In the configuration illustrated in Figure 8C, female structure 822 of panel 810A and male structure 833 of other panel 810B are mutually (securely) engaged, thus (securely) engaging panel 810A and other panel 810B. Panel 810A can be released from other panel 810B by prying.

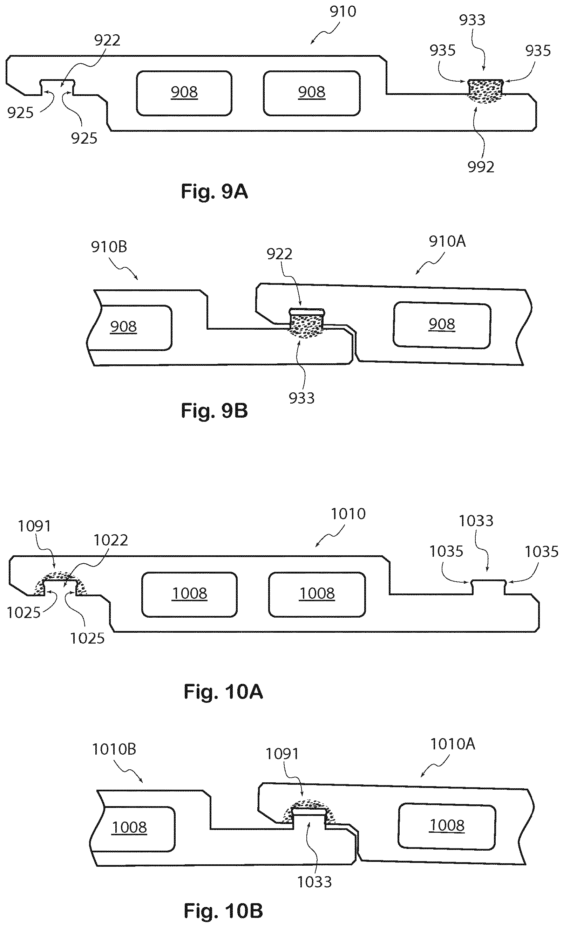

Figure 9A shows a schematic (widthwise) cross-section through an embodiment of a panel 910 in accordance with the present disclosure, *e.g.* as described above.

In the illustrated embodiment, panel 910 comprises two conduits 908, an engagement structure in the form of a female structure 922 and a resilient portion 992 that constitutes an engagement structure in the form of a male structure 933. Male structure 933 is a counterpart of female structure 922, male structure 933 and female structure 922 forming counterparts of a snap lock engagement mechanism. As reflected by the speckling of resilient portion 992 in the Figs. 9A and 9B, resilient portion 992 may be of a different, *e.g.* more pliable, material than other portions / a remainder of panel 910, *e.g.* a material that allows resilient portion 992 to (temporarily / elastically) deform.

Female structure 922 comprises bulges 925 that narrow a portion of female structure 922. Similarly, male structure 933 comprises bulges 935 that widen a portion of male structure 933. Bulges 935 of male structure 933 are (temporarily / elastically) deformed by bulges 925 of female structure 922 during an engaging / disengaging motion of male structure 933 and female structure 922 relative to one another, which (temporary / elastic) deformation provides the "snap" of the snap lock engagement mechanism.

Figure 9B shows a schematic depiction of panel 910A of Figure 9A in partial engagement with another (such) panel 910B, *e.g.* during pivoting of panel 910A relative to panel 910B as described above.

In the illustrated configuration, male structure 933 and female structure 922 are in partial engagement, bulges 935 of male structure 933 being (temporarily / elastically) deformed by bulges 925 of female structure 922 due to the mutual shapes and relative motion of male structure 933 and female structure 922.

Figure 10A shows a schematic (widthwise) cross-section through an embodiment of a panel 1010 in accordance with the present disclosure, *e.g.* as described above.

In the illustrated embodiment, panel 1010 comprises two conduits 1008, an engagement structure in the form of a male structure 1033 and a resilient portion 1091 that constitutes an engagement structure in the form of a female structure 1022. Male structure 1033 is a counterpart of female structure 1022, male structure 1033 and female structure 1022 forming counterparts of a snap lock engagement mechanism. As reflected by the speckling of resilient portion 1091 in the Figs. 10A and 10B, resilient portion 1091 may be of a different, *e.g.* more pliable, material than other portions / a remainder of panel 1010, *e.g.* a material that allows resilient portion 1091 to (temporarily / elastically) deform.

Female structure 1022 comprises bulges 1025 that narrow a portion of female structure 1022. Similarly, male structure 1033 comprises bulges 1035 that widen a portion of male structure 1033. Bulges 1025 of female structure 1022 are (temporarily / elastically) deformed by bulges 1035 of male structure 1033 during an engaging / disengaging motion of male structure 1033 and female structure 1022 relative to one another, which (temporary / elastic) deformation provides the "snap" of the snap lock engagement mechanism.

Figure 10B shows a schematic depiction of panel 1010A of Figure 10A in partial engagement with another (such) panel 1010B, e.g. during pivoting of panel 1010A relative to panel 1010B as described above.

In the illustrated configuration, male structure 1033 and female structure 1022 are in partial engagement, bulges 1025 of female structure 1022 being (temporarily / elastically) deformed by bulges 1035 of male structure 1033 due to the mutual shapes and relative motion of male structure 1033 and female structure 1022.

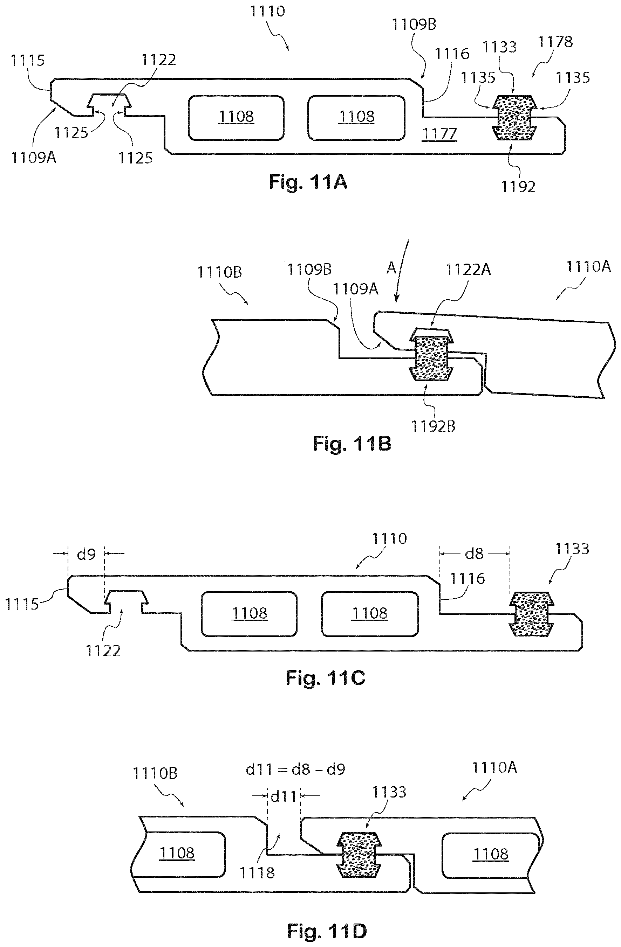

Figure 11A shows a schematic (widthwise) cross-section through an embodiment of a panel 1110 in accordance with the present disclosure, *e.g.* as described above.

In the illustrated embodiment, panel 1110 comprises conduits 1108, an engagement structure in the form of a female structure 1122 and a resilient portion 1192, a (projecting) portion of resilient portion 1192 constituting an engagement structure in the form of a male structure 1133. Similar to the embodiment shown in Figs. 7A and 7B, panel 1110 is assembled from a first extruded product 1177 and a second extruded product 1178 in the form of resilient portion 1192.

Male structure 1133 is a counterpart of female structure 1122, male structure 1133 and female structure 1122 forming counterparts of a snap lock engagement mechanism. As reflected by the speckling of resilient portion 1192 in the Figs. 11A to 11D, resilient portion 1192 may be of a different, *e.g.* more pliable, material than other portions / a remainder of panel 1110, *e.g.* a material that allows resilient portion 1192 to (temporarily / elastically) deform.

Female structure 1122 comprises bulges 1125 that narrow a portion of female structure 1122. Similarly, male structure 1133 comprises bulges 1135 that widen a portion of male structure 1133. Bulges 1125 of female structure 1122 are (temporarily / elastically) deformed by bulges 1135 of male structure 1133 during an engaging / disengaging motion of male structure 1133 and female structure 1122 relative to one another, which (temporary / elastic) deformation provides the "snap" of the snap lock engagement mechanism.

Panel 1110 comprises a first bevel 1109A at a corner of an outer-lying minor lateral surface 1115 of panel 1110 and a second bevel 1109B at a corner of an inner-lying minor lateral surface 1116 of panel 1110. As shown in Fig. 11B, the first and second bevels may be at diagonally opposite corners of a groove formed by a gap 1118, and the first bevel may be of a shape and size for receiving a prying tool, *e.g.* a prying tool for disengaging panel 1110A from another such panel 1110B, *i.e.* for prying panel 1110A at the first bevel so as to disengage an engagement structure of panel 1110A from a counterpart engagement structure of other panel 1110B.

Figure 11B shows a schematic depiction of engagement of panel 1110A of Figure 11A with another such panel 1110B, *e.g.* as described above.

In the configuration illustrated in Figure 11B, female structure 1122A of panel 1110A is in partial engagement with male structure 1133B formed by the (protruding) portion of resilient portion 1192B of other panel 1110B as panel 1110A is pivoted (as represented by arc-shaped arrow A) relative to other panel 1110B, bulges 1135 of male structure 1133B being (temporarily / elastically) deformed by bulges 1125 of female structure 1122A due to the mutual shapes and relative motion of male structure 1133B and female structure 1122A.

Figures 11C and 11D shows a schematic depiction of further features of panel 1110 of Figure 11A.

As depicted in Figure 11C, male structure 1133 is distanced by a distance d8 from an inner-lying minor surface of panel 1110, and female structure 1822 is distanced by a distance d9 from an outer-lying minor surface of panel 1110. As depicted in Figure 11D, a gap 1118 formed between a(n upper) major surface of panel 1110A and a (substantially) coplanar, (upper) major surface of an adjacent, other such panel 1110B has a dimension d11 (substantially) equal to a difference obtained by subtracting d9 from d8.

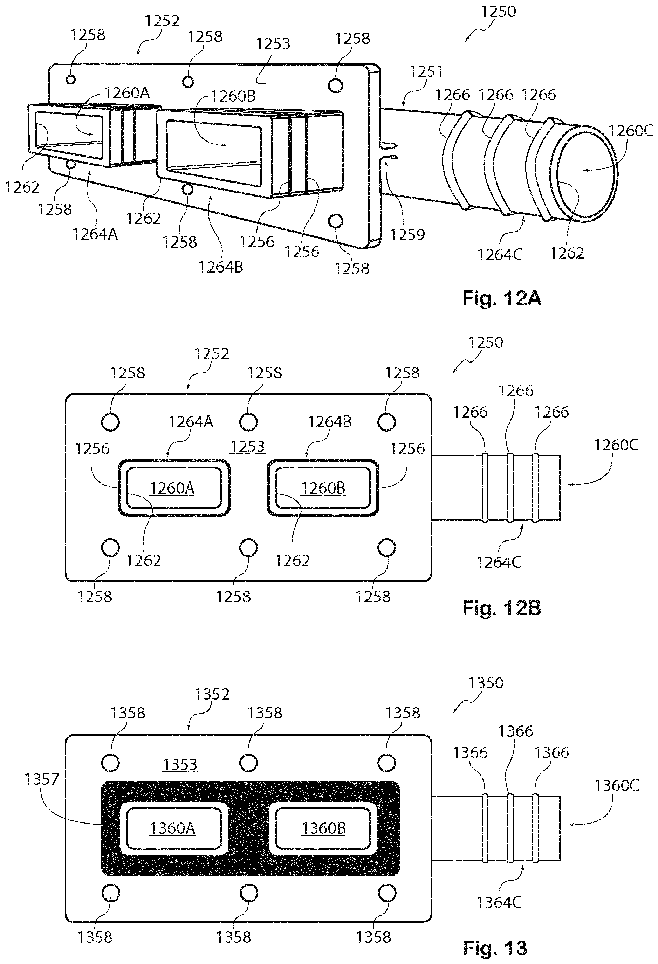

Figure 12A shows a schematic, perspective depiction of an embodiment of a manifold 1250 in accordance with the present disclosure, *e.g.* as described above, and Figure 12B shows a schematic, side plan depiction of the manifold of Fig. 12A

In the illustrated embodiment, manifold 1250 comprises a distribution chamber 1251, an attachment portion 1252 having a planar abutment surface 1253, a plurality of O-rings 1256, a plurality of (fastener) openings 1258, a bridge portion 1259 and three ports 1260A-1260C having port walls 1262 that form respective cylindrical structures 1264A-1264C. Furthermore, port 1260C comprises a plurality of ridges 1266 on an outer circumference of cylindrical structure 1264C.

In the illustrated embodiment, cylindrical structures 1264A and 1264B of ports 1260A and 1260B extend perpendicularly from planar abutment surface 1253 in the same direction. Cylindrical structure 1264C of port 1260C extends perpendicularly to cylindrical structures 1264A and 1264B of ports 1260A and 1260B. O-rings 1256 are located on an outer circumference of a respective one of ports 1260A and 1260B. Bridge portion 1259 connects attachment portion 1252 and distribution chamber 1251 in addition to the connection of attachment portion 1252 and distribution chamber 1251 provided by ports 1260A and 1260B.

Figure 13 shows a schematic depiction of an embodiment of a manifold 1350 in accordance with the present disclosure, *e.g.* as described above.

In the illustrated embodiment, manifold 1350 comprises an attachment portion 1352 having a planar abutment surface 1353, a gasket 1357, a plurality of (fastener) openings 1358, and three ports 1360A-1360C having port walls that form respective cylindrical structures, of which only cylindrical structure 1364C is visible in the Figure. Furthermore, port 1360C comprises a plurality of ridges 1366 on an outer circumference of cylindrical structure 1364C. Gasket 1357 abuts a region of planar abutment surface 1353 surrounding ports 1360A and 1360B.

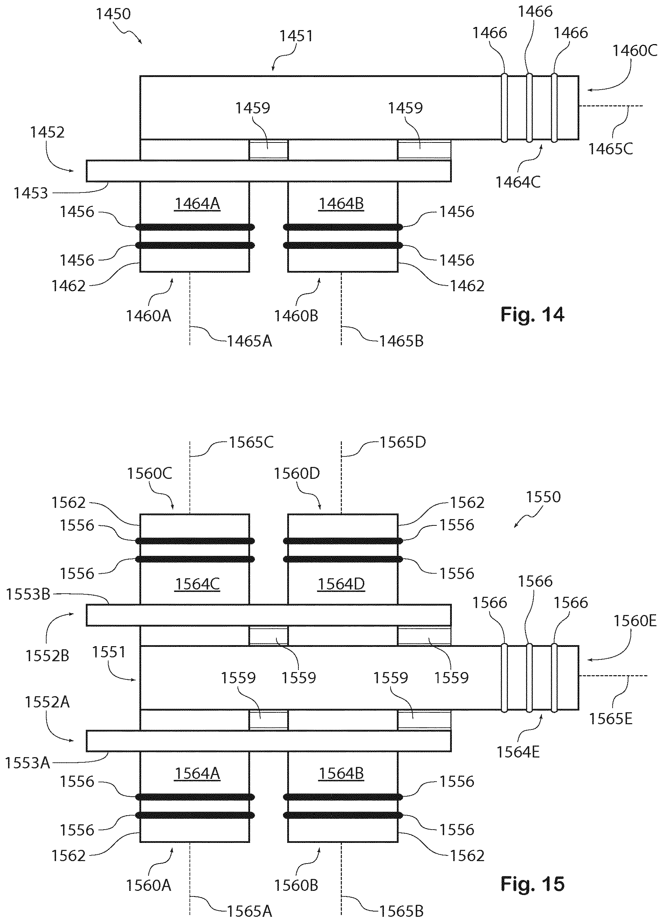

Figure 14 shows a schematic depiction of an embodiment of a manifold 1450 in accordance with the present disclosure, *e.g.* as described above.

In the illustrated embodiment, manifold 1450 comprises a distribution chamber 1451, an attachment portion 1452 having a planar abutment surface 1453, a plurality of O-rings 1456, two bridge portions 1459 and three ports 1460A-1460C having port walls 1462 that form respective cylindrical structures 1464A-1464C along respective cylindrical axes 1465A-1465C. Furthermore, port 1460C comprises a plurality of ridges 1466 on an outer circumference of cylindrical structure 1464C.

In the illustrated embodiment, cylindrical structures 1464A and 1464B and respective cylindrical axes 1465A, 1465B of ports 1460A and 1460B extend perpendicularly from planar abutment surface 1453 in the same direction. O-rings 1456 are located on an outer circumference of a respective one of ports 1460A and 1460B. Bridge portions 1459 connect attachment portion 1452 and distribution chamber 1451 in addition to the connection of attachment portion 1452 and distribution chamber 1451 provided by ports 1460A and 1460B. Cylindrical structure 1264C and respective cylindrical axis 1465C of port 1460C extends perpendicularly to cylindrical structures 1464A and 1464B and respective cylindrical axes 1465A, 1465B of ports 1260A and 1460B. Each of ports 1460A and 1460B is in fluid communication with port 1460C via distribution chamber 1451. Although not visible in the Figure, any of cylindrical axes 1465A-1465C may be in a common plane.

Figure 15 shows a schematic depiction of an embodiment of a manifold 1550 in accordance with the present disclosure, *e.g.* as described above.

In the illustrated embodiment, manifold 1550 comprises a distribution chamber 1551, two attachment portions 1552A and 1552B, a plurality of O-rings 1556, four bridge portions 1559 and five ports 1560A-1560E having port walls 1562 that form respective cylindrical structures 1564A-1564E along respective cylindrical axes 1565A-1565E. Furthermore, port 1560E comprises a plurality of ridges 1566 on an outer circumference of cylindrical structure 1564E, and each of attachment portions 1552A and 1552B has a respective planar abutment surface 1553A, 1553B.

In the illustrated embodiment, cylindrical structures 1564A and 1564B and respective cylindrical axes 1565A, 1565B of ports 1560A and 1560B extend perpendicularly from planar abutment surface 1553A in a first direction, whereas cylindrical structures 1564C and 1564D and respective cylindrical axes 1565C, 1565D of ports 1560C and 1560D extend perpendicularly from planar abutment surface 1553B in a second direction antiparallel to the first direction. O-rings 1556 are located on an outer circumference of a respective one of ports 1560A-1560D. Bridge portions 1559 connect attachment portions 1552A, 1552B and distribution chamber 1551 in addition to the connection of attachment portions 1552A, 1552B and distribution chamber 1551 provided by ports 1560A-1560D. Cylindrical structure 1564E and respective cylindrical axis 1565E of port 1560E extends perpendicularly to cylindrical structures 1564A-1564D and respective cylindrical axes 1565A-1565D of ports 1560A-1560D. Each of ports 1560A-1560D is in fluid communication with port 1560E via distribution chamber 1551. Although not visible in the Figure, any of cylindrical axes 1565A-1565E may be in a common plane.

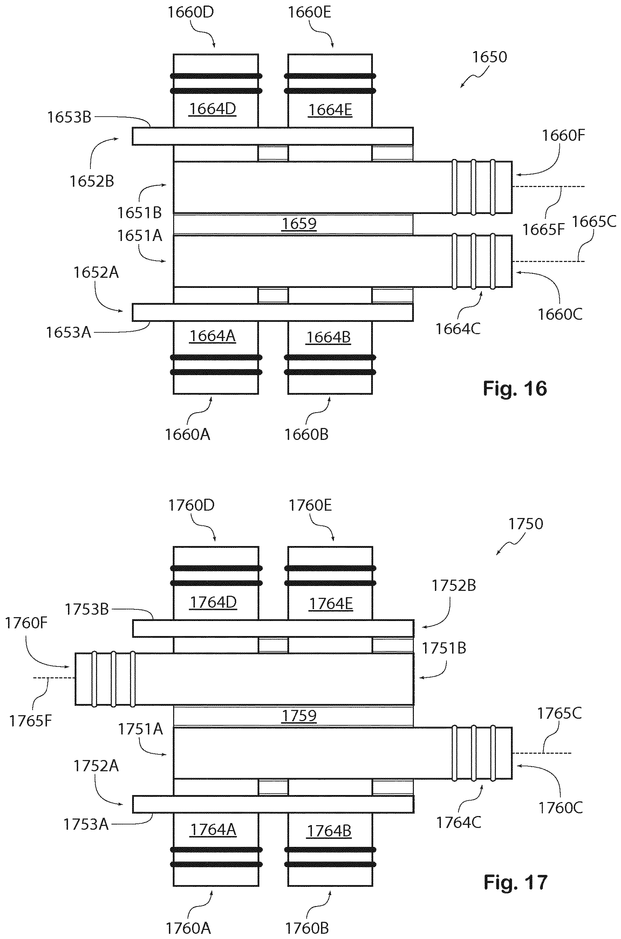

Figure 16 shows a schematic depiction of an embodiment of a manifold 1650 in accordance with the present disclosure, *e.g.* as described above.

In the illustrated embodiment, manifold 1650 comprises two distribution chambers 1651A and 1651B, two attachment portions 1652A and 1652B, a bridge portion 1659 and six ports 1660A-1660F having port walls that form respective cylindrical structures 1664A-1664F along respective cylindrical axes 1665A-1665F. Furthermore, each of ports 1660E and 1660F comprises a plurality of ridges 1666 on an outer circumference of respective cylindrical structure 1664E, 1664F. Each of attachment portions 1652A and 1652B has a respective planar abutment surface 1653A, 1653B.

In the illustrated embodiment, cylindrical structures 1664A and 1664B and respective cylindrical axes 1665A, 1665B of ports 1660A and 1660B extend perpendicularly from planar abutment surface 1653A in a first direction, whereas cylindrical structures 1664D and 1664E and respective cylindrical axes 1665D, 1665E of ports 1660D and 1660E extend perpendicularly from planar abutment surface 1653B in a second direction antiparallel to the first direction. Cylindrical structures 1664C, 1664F and respective cylindrical axes 1665C, 1665F of ports 1660C, 1660F extend, in the same direction, perpendicularly to cylindrical structures 1664A, 1664B, 1664D, 1664E and respective cylindrical axes 1665A, 1665B, 1665D, 1665E of ports 1660A, 1650B, 1650D, 1660E. Each of ports 1660A-1660B is in fluid communication with port 1660C via distribution chamber 1651A. Each of ports 1660D-1660E is in fluid communication with port 1660F via distribution chamber 1651B. Bridge portion 1659 connects distribution chambers 1651A and 1651B. Although not visible in the Figure, any of cylindrical axes 1665A-1665F may be in a common plane.

Figure 17 shows a schematic depiction of an embodiment of a manifold 1750 in accordance with the present disclosure, *e.g.* as described above.

In the illustrated embodiment, manifold 1750 comprises two distribution chambers 1751A and 1751B, two attachment portions 1752A and 1752B, a bridge portion 1759 and six ports 1760A-1760F having port walls that form respective cylindrical structures 1764A-1764F along respective cylindrical axes 1765A-1765F. Furthermore, each of ports 1760E and 1760F comprises a plurality of ridges 1766 on an outer circumference of respective cylindrical structure 1764E, 1764F. Each of attachment portions 1752A and 1752B has a respective planar abutment surface 1753A, 1753B.

In the illustrated embodiment, cylindrical structures 1764A and 1764B and respective cylindrical axes 1765A, 1765B of ports 1760A and 1760B extend perpendicularly from planar abutment surface 1753A in a first direction, whereas cylindrical structures 1764D and 1764E and respective cylindrical axes 1765D, 1765E of ports 1760D and 1760E extend perpendicularly from planar abutment surface 1753B in a second direction antiparallel to the first direction. Cylindrical structures 1764C, 1764F and respective cylindrical axes 1765C, 1765F of ports 1760C, 1760F extend, in opposite directions, perpendicularly to cylindrical structures 1764A, 1764B, 1764D, 1764E and respective cylindrical axes 1765A, 1765B, 1765D, 1765E of ports 1760A, 1750B, 1750D, 1760E. Each of ports 1760A-1760B is in fluid communication with port 1760C via distribution chamber 1751A. Each of ports 1760D-1760E is in fluid communication with port 1760F via distribution chamber 1751B. Bridge portion 1759 connects distribution chambers 1751A and 1751B. Although not visible in the Figure, any of cylindrical axes 1765A-1765F may be in a common plane.

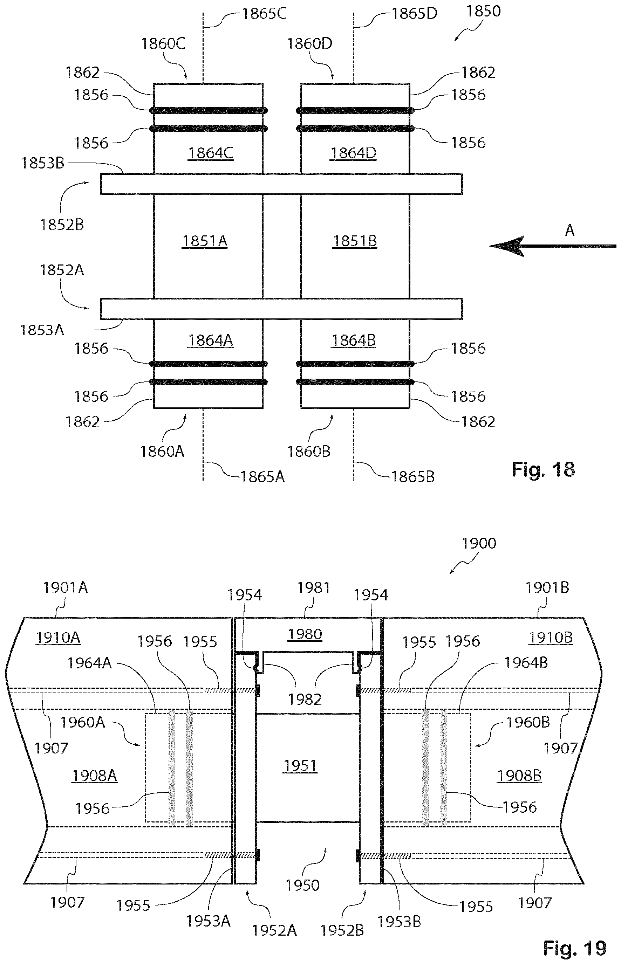

Figure 18 shows a schematic depiction of an embodiment of a manifold 1850 in accordance with the present disclosure, *e.g.* as described above.

In the illustrated embodiment, manifold 1850 comprises two distribution chambers 1851A and 1851B, two attachment portions 1852A and 1852B, a plurality of O-rings 1856 and four ports 1860A-1860D having port walls 1862 that form respective cylindrical structures 1864A-1864D along respective cylindrical axes 1865A-1865D. Each of attachment portions 1852A and 1852B has a respective planar abutment surface 1853A, 1853B.

In the illustrated embodiment, cylindrical structures 1864A and 1864B and respective cylindrical axes 1865A, 1865B of ports 1860A and 1860B extend perpendicularly from planar abutment surface 1853A in a first direction, whereas cylindrical structures 1864C and 1864D and respective cylindrical axes 1865C, 1865D of ports 1860C and 1860D extend perpendicularly from planar abutment surface 1853B in a second direction antiparallel to the first direction. Port 1860A is in fluid communication with port 1860C via distribution chamber 1851A. Port 1860B is in fluid communication with port 1860D via distribution chamber 1851B. Although not visible in the Figure, any of cylindrical axes 1865A-1865D may be in a common plane.

Figure 19 shows a schematic depiction of an embodiment of a fluid conduit system 1900 in accordance with the present disclosure, *e.g.* as described above.

In the illustrated embodiment, fluid conduit system 1900 comprises a first panel 1910A, a second panel 1910B, a manifold 1950, a cover 1980 and a plurality of fasteners 1955. The perspective in Figure 19 shows manifold 1950 as if viewed from direction A in Figure 18.

First panel 1910A comprises a conduit 1908A and a major surface 1901A. Second panel 1910B comprises a conduit 1908B and a major surface 1901B. Manifold 1950 comprises a distribution chamber 1951, two attachment portions 1952A and 1952B, a plurality of O-rings 1956 and two ports 1960A-1960B having port walls that form respective cylindrical structures 1964A-1964B along respective cylindrical axes 1965A-1965B. Each of attachment portions 1952A and 1952B has a respective planar abutment surface 1953A, 1953B.

In the illustrated embodiment, cylindrical structure 1964A of port 1960A extends perpendicularly from planar abutment surface 1953A in a first direction, whereas cylindrical structure 1964B of port 1960B extends perpendicularly from planar abutment surface 1953B in a second direction antiparallel to the first direction. Port 1960A is in fluid communication with port 1960B via distribution chamber 1951. Cylindrical structure 1964A of port 1960A extends into conduit 1908A of first panel 1910A and cylindrical structure 1964B of port 1960B extends into conduit 1908B of second panel 1910B. O-rings 1956 provide a watertight seal between an outer circumference of port 1960A and conduit 1908A and between an outer circumference of port 1960B and conduit 1908B. Fasteners 1955 extend through openings (not shown) in attachment portions 1952A, 1952B into bores 1907 in panels 1910A, 1910B to fasten manifold 1950 to panels 1910A, 1910B. Cover 1980 rests on attachment portions 1952A, 1952B such that a cover surface 1981 of cover 1980 is coplanar with major surface 1901A of panel 1910A and major surface 1901B of panel 1910B. Fasteners 1954 of cover 1980 snappingly engage with grooves 1954 providing in attachment portions 1952A, 1952B to secure cover 1980 to manifold 1950.

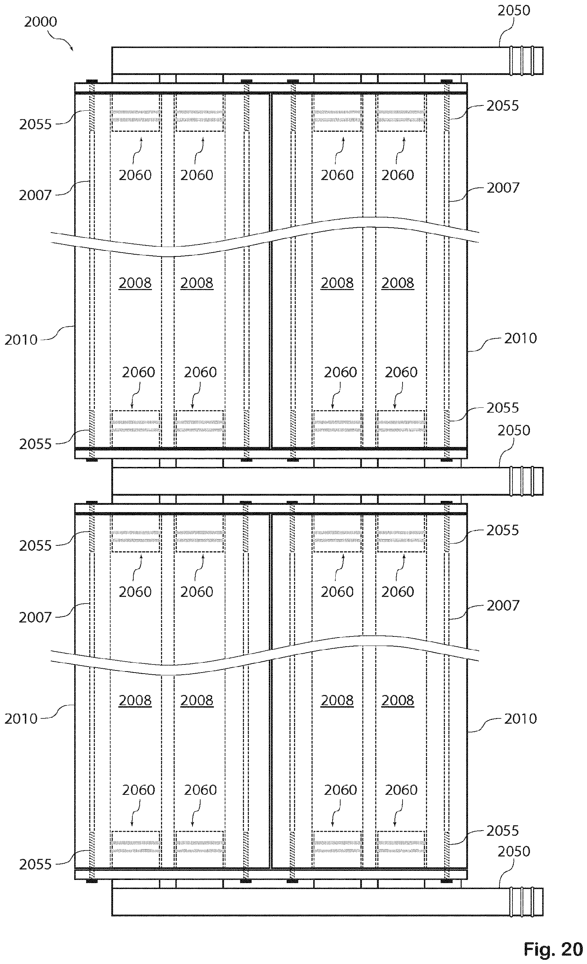

Figure 20 shows a schematic depiction of an embodiment of a fluid conduit system 2000 in accordance with the present disclosure, *e.g.* as described above.

In the illustrated embodiment, fluid conduit system 2000 comprises a plurality of panels 2010 and manifolds 2050. The panels 2010 are fastened to manifolds 2050 by fasteners 2055 that engage respective bores 2007 in panels 2010. Manifolds 2050 have ports 2060 that extend, in a watertight manner, into respective conduits 2008 in panels 2010. Although not visible in the Figure, the respective (upper) surfaces of panels 2010 may be in a common plane. Furthermore, a cover may be mounted onto the central manifold such that a cover surface of the cover also lies in that common plane to form an essentially contiguous surface with the (upper) surfaces of panels 2010.

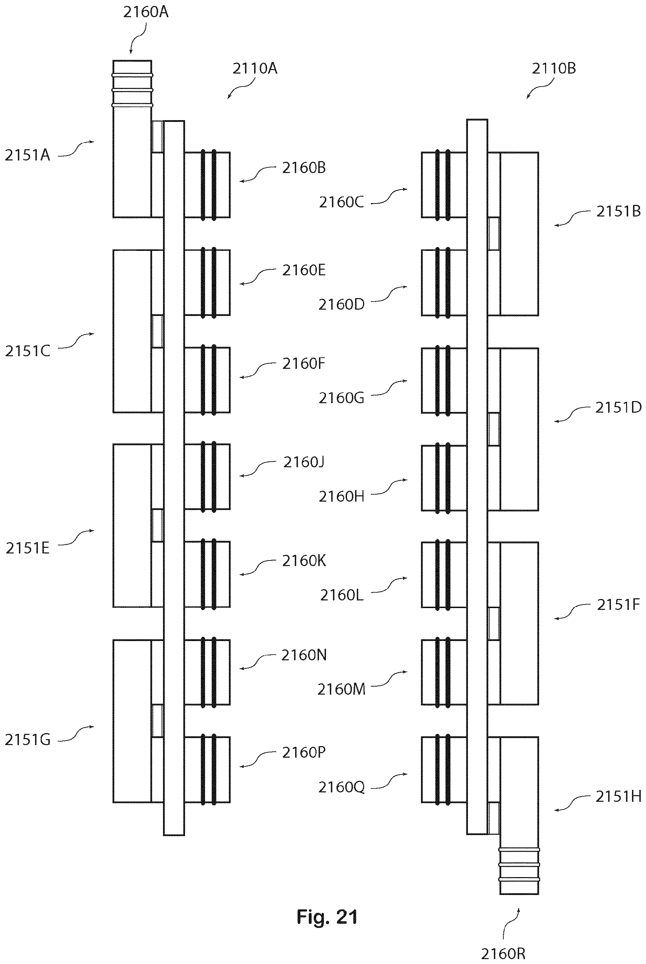

Figure 21 shows a schematic depiction of an embodiment of a manifold 2110A, 2110B in accordance with the present disclosure, e.g. as described above.

In the illustrated embodiment, manifolds 2110A and 2110B are identical and allow a watertight serpentine conduit path between port 2160A and port 2160R to be easily assembled by connecting manifolds 2110A, 2110B with panels (not shown) having conduits, *e.g.* in the manner similar to that shown in Figure 20. Specifically, port 2160A is in fluid connection with port 2160B via distribution chamber 2151A. A conduit in a panel can provide a fluid connection between port 2160B and port 2160C. Port 2160C is in fluid connection with port 2160D via distribution chamber 2151B. A conduit in a panel can provide a fluid connection between port 2160D and port 2160E. Port 2160E is in fluid connection with port 2160F via distribution chamber 2151C. A conduit in a panel can provide a fluid connection between port 2160F and port 2160G. Port 2160G is in fluid connection with port 2160H via distribution chamber 2151D. A conduit in a panel can provide a fluid connection between port 2160H and port 2160J. Port 2160J is in fluid connection with port 2160K via distribution chamber 2151E. A conduit in a panel can provide a fluid connection between port 2160K and port 2160L. Port 2160L is in fluid connection with port 2160M via distribution chamber 2151F. A conduit in a panel can provide a fluid connection between port 2160M and port 2160N. Port 2160N is in fluid connection with port 2160P via distribution chamber 2151G. A conduit in a panel can provide a fluid connection between port 2160P and port 2160Q. Port 2160Q is in fluid connection with port 2160R via distribution chamber 2151H.

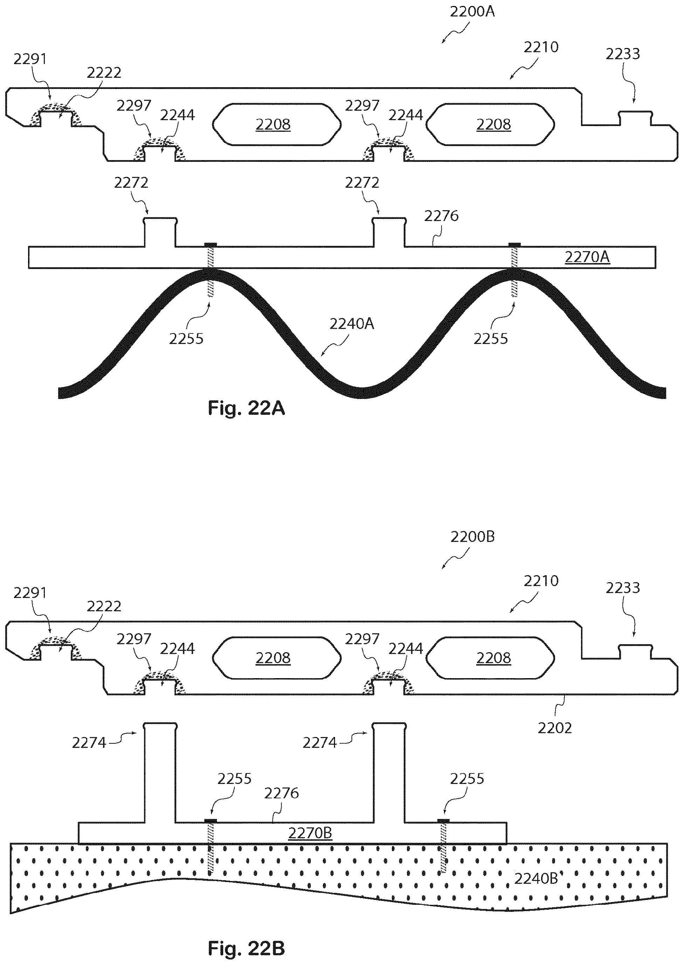

Each of Figures 22A and 22B shows a schematic (widthwise) cross-section through an embodiment of a fluid conduit system 2200A / 2200B in accordance with the present disclosure, *e.g.* as described above.

In the illustrated embodiments, fluid conduit system 2200A / 2200B comprises a panel 2210 and a mounting element 2270A / 2270B.

Panel 2210 comprises two conduits 2208, an engagement structure in the form of a male structure 2233 and a resilient portion 2291 that constitutes an engagement structure in the form of a female structure 2222. Male structure 2233 is a counterpart of female structure 2222, male structure 2233 and female structure 2222 forming counterparts of a snap lock engagement mechanism. As reflected by the speckling of resilient portion 2291, resilient portion 2291 may be of a different, *e.g.* more pliable, material than other portions / a remainder of panel 2210, *e.g.* a material that allows resilient portion 2291 to (temporarily / elastically) deform.

Female structure 2222 comprises bulges that narrow a portion of female structure 2222. Similarly, male structure 2233 comprises bulges that widen a portion of male structure 2233. The bulges of female structure 2222 are (temporarily / elastically) deformed by the bulges 2235 of male structure 2233 during an engaging / disengaging motion of male structure 2233 and female structure 2222 relative to one another, which (temporary / elastic) deformation provides the "snap" of the snap lock engagement mechanism.

Panel 2210 moreover comprises two resilient portions 2297, each of which respectively constitutes an engagement structure 2244 in the form of a female structure.

In the embodiment of Figure 22A, mounting element 2270A comprises two (counterpart) engagement structures 2272 in the form of male structures that extend from a (plate-shaped) base portion 2276. (Plate-shaped) base portion 2276 provides a large area for receiving fasteners, thus simplifying mounting to uneven surfaces. In the depicted embodiment, mounting element 2270A is mounted to a wavy surface 2240A by fasteners 2255.

In the embodiment of Figure 22B, mounting element 2270B comprises two (counterpart) engagement structures 2274 in the form of male structures that extend significantly away from (plate-shaped) base portion 2276 to space a major surface 2202 of panel 2210 from (plate-shaped) base portion 2276 when engagement structures 2274 of mounting element 2270B are engaged with engagement structures 2244 of panel 2210. In the depicted embodiment, mounting element 2270B is mounted to a substantially flat surface 2240B by fasteners 2255.

In the present disclosure, the verb "may" is used to designate optionality / noncompulsoriness. In other words, something that "may" can, but need not. In the present disclosure, the verb "comprise" may be understood in the sense of including. Accordingly, the verb "comprise" does not exclude the presence of other elements / actions. In the present disclosure, relational terms such as "first," "second," "top," "bottom" and the like may be used solely to distinguish one entity or action from another entity or action without necessarily requiring or implying any actual such relationship or order between such entities or actions.

In the present disclosure, the term "any" may be understood as designating any number of the respective elements, *e.g.* as designating one, at least one, at least two, each or all of the respective elements. Similarly, the term "any" may be understood as designating any collection(s) of the respective elements, *e.g.* as designating one or more collections of the respective elements, wherein a (respective) collection may comprise one, at least one, at least two, each or all of the respective elements. The respective collections need not comprise the same number of elements.

In the present disclosure, the expression "at least one" is used to designate any (integer) number or range of (integer) numbers (that is technically reasonable in the given context). As such, the expression "at least one" may, *inter alia,* be understood as one, two, three, four, five, ten, fifteen, twenty or one hundred. Similarly, the expression "at least one" may, *inter alia,* be understood as "one or more," "two or more" or "five or more."

In the present disclosure, expressions in parentheses may be understood as being optional. As used in the present disclosure, quotation marks may emphasize that the expression in quotation marks may also be understood in a figurative sense. As used in the present disclosure, quotation marks may identify a particular expression under discussion.

In the present disclosure, many features are described as being optional, e.g. through the use of the verb "may" or the use of parentheses. For the sake of brevity and legibility, the present disclosure does not explicitly recite each and every combination and/or permutation that may be obtained by choosing from the set of optional features. However, the present disclosure is to be interpreted as explicitly disclosing all such combinations / permutations. For example, a system described as having three optional features may be embodied in seven different ways, namely with just one of the three possible features, with any two of the three possible features or with all three of the three possible features.

While various embodiments of the present invention have been disclosed and described in detail herein, it will be apparent to those skilled in the art that various changes may be made to the configuration, operation and form of the invention without departing from the scope thereof. In particular, it is noted that the respective features of the invention, even those disclosed solely in combination with other features of the invention, may be combined in any configuration excepting those readily apparent to the person skilled in the art as nonsensical. Likewise, use of the singular and plural is solely for the sake of illustration and is not to be interpreted as limiting. Except where the contrary is explicitly noted, the plural may be replaced by the singular and vice-versa.

## Claims

1. A fluid conduit system (1900; 2000), comprising:
at least one panel (310; 1910A; 12010,2210) having a constant cross-section;
a first plurality of conduits (308; 1908A; 2008), each extending through a respective one of said at least one panel;
a first manifold (1950; 2050) in fluid connection with said first plurality of conduits; and
a second manifold (2050) in fluid connection with said first plurality of conduits, wherein
each of said at least one panel comprises:
a first major face (311); and
a second major face (312) opposite said first major face, **characterized in that**:
a peripheral outline of said panel has substantially a shape of a rectangular cuboid excepting a first recessed portion (320) along a first edge of said first major face and a second recessed portion (330) along a second edge of said second major face diagonally opposite said first edge, and
said first and second recessed portions define counterparts (322, 333) of an engagement mechanism that inhibits lateral motion of said panel away from another said panel when said first recessed portion is in counterpart engagement with said second recessed portion of said another panel.

2. The fluid conduit system of claim 1, wherein:
said at least one panel (2210) comprises a first engagement structure (2244) in, at or on said first major surface.

3. The fluid conduit system of claim 2, wherein:
said at least one panel comprises a first resilient portion i engagement structure (2244).

4. The fluid conduit system of claim 2 or 3, comprising:
a mouting element (2270A, 2270B) comprising a second engagement structure (2272) having a shape that engages said first engagement structure (2244).

5. The fluid conduit system of claim 4, wherein:
said mounting element (2270A, 2270B) comprises a second resilient portion in a region of said second engagement structure (2272).

6. The fluid conduit system of claim 4 or 5, wherein:
said second engagement structure (2272) has a shape that snappingly engages said first engagement structure (2244).

7. The fluid conduit system of claim 6, wherein:
at least one of said first engagement structure and said second engagement structure is of a shape that uses a resilience of first / second resilient portion for said snapping engagement.

8. The fluid conduit system of any one of claims 4-7, wherein:
said mounting element (2270A, 2270B) has a constant cross-section.

9. The fluid conduit system of any one of claims 4-8, wherein:
said mounting element (2270A, 2270B) comprises a plate-shaped base portion.

10. The fluid conduit system of any one of the preceding claims, comprising:
a cover (1980) comprising a major surface (1981) coplanar to a major surface (1901A, 1901B) of at least one of said at least one panel.

11. The fluid conduit system of claim 10, wherein:
said cover (1980) comprises a snap-lock fastening mechanism that fastens to said first manifold (1950, 2050).

12. A building, comprising:
a fluid conduit system of any one of the preceding claims positioned on an exterior wall of said building.

13. A method of assembling a fluid conduit system (1900; 2000), comprising:
positioning at least one panel (300; 1910A; 2010) having a constant cross-section on an exterior wall of a building, said at least one panel comprising a first plurality of conduits (308), each extending through a respective one of said at least one panel;
assembling a first manifold (1950; 2050) in fluid connection with said first plurality of conduits; and
assembling a second manifold (2050) in fluid connection with said first plurality of conduits, wherein
each of said at least one panel comprises:
a first major face (311); and
a second major face (312) opposite said first major face, wherein a peripheral outline of said panel has substantially a shape of a rectangular cuboid excepting a first recessed portion (320) along a first edge of said first major face and a second recessed portion (330) along a second edge of said second major face diagonally opposite said first edge, and
said first and second recessed portions define counterparts (322, 333) of an engagement mechanism that inhibits lateral motion of said panel away from another said panel when said first recessed portion is in counterpart engagement with said second recessed portion of said another panel.

14. The method of claim 13, comprising:
positioning another at least one panel having a constant cross-section on said exterior wall, said another at least one panel comprising a second plurality of conduits (2008), each extending through a respective one of said another at least one panel; and
assembling said first manifold to be in fluid connection with said second plurality of conduits.

## Patentansprüche

1. Fluidleitungssystem (1900; 2000), das aufweist:
wenigstens eine Tafel (310; 1910A; 2010, 2210) mit einem konstanten Querschnitt;
eine erste Mehrzahl von Leitungen (308; 1908A; 2008), die jeweils durch jeweils eine der wenigstens einen Tafeln verlaufen;
einen ersten Verteiler (1950; 2050) in Fluidverbindung mit der ersten Mehrzahl von Leitungen; und
einen zweiten Verteiler (2050) in Fluidverbindung mit der ersten Mehrzahl von Leitungen, wobei
jede der wenigstens einen Tafeln aufweist:
eine erste Hauptfläche (311); und
eine zweite Hauptfläche (312), die der ersten Hauptfläche gegenüberliegt, **dadurch gekennzeichnet, dass**:
eine Umfangskontur der Tafel mit Ausnahme eines ersten ausgesparten Abschnitts (320) entlang eines ersten Rands der ersten Hauptfläche und eines zweiten ausgesparten Abschnitts (330) entlang eines zweiten Rands der zweiten Hauptfläche, der dem ersten Rand diagonal gegenüberliegt, im Wesentlichen eine Form eines rechteckigen Quaders aufweist, und
der erste und der zweite ausgesparte Abschnitt Gegenstücke (322, 333) eines Eingriffsmechanismus definieren, der die seitliche Bewegung der Tafel von einer anderen Tafel weg verhindert, wenn der erste ausgesparte Abschnitt mit dem zweiten ausgesparten Abschnitt der anderen Tafel in Gegeneingriff ist.

2. Fluidleitungssystem nach Anspruch 1, wobei:
die wenigstens eine Tafel (2210) in, bei oder auf der ersten Hauptoberfläche eine erste Eingriffsstruktur (2244) aufweist.

3. Fluidleitungssystem nach Anspruch 2, wobei:
die wenigstens eine Tafel in einem Gebiet der ersten Eingriffsstruktur (2244) einen ersten elastischen Abschnitt (2297) aufweist.

4. Fluidleitungssystem nach Anspruch 2 oder 3, das aufweist:
ein Befestigungselement (2270A, 2270B), das eine zweite Eingriffsstruktur (2272) mit einer Form aufweist, die mit der ersten Eingriffsstruktur (2244) in Eingriff ist.

5. Fluidleitungssystem nach Anspruch 4, wobei:
das Befestigungselement (2270A, 2270B) in einem Gebiet der zweiten Eingriffsstruktur (2272) einen zweiten elastischen Abschnitt aufweist.

6. Fluidleitungssystem nach Anspruch 4 oder 5, wobei:
die zweite Eingriffsstruktur (2272) eine Form aufweist, die mit der ersten Eingriffsstruktur (2244) federnd in Eingriff ist.

7. Fluidleitungssystem nach Anspruch 6, wobei:
die erste Eingriffsstruktur und/oder die zweite Eingriffsstruktur eine Form aufweist, die für den federnden Eingriff eine Elastizität des ersten/zweiten elastischen Abschnitts verwendet.

8. Fluidleitungssystem nach einem der Ansprüche 4-7, wobei:
das Befestigungselement (2270A, 2270B) einen konstanten Querschnitt aufweist.

9. Fluidleitungssystem nach einem der Ansprüche 4-8, wobei:
das Befestigungselement (2270A, 2270B) einen plattenförmigen Basisabschnitt aufweist.

10. Fluidleitungssystem nach einem der vorhergehenden Ansprüche, das aufweist:
eine Abdeckung (1980), die eine Hauptoberfläche (1981) aufweist, die koplanar zu einer Hauptoberfläche (1901A, 1901B) wenigstens einer der wenigstens einen Tafeln ist.

11. Fluidleitungssystem nach Anspruch 10, wobei:
die Abdeckung (1980) einen Klemmbefestigungsmechanismus aufweist, der an dem ersten Verteiler (1950, 2050) befestigt wird.

12. Gebäude, das aufweist:
ein Fluidleitungssystem nach einem der vorhergehenden Ansprüche, das an einer Außenwand des Gebäudes positioniert ist.

13. Verfahren zum Montieren eines Fluidleitungssystems (1900; 2000), wobei das Verfahren aufweist:
Positionieren wenigstens einer Tafel (300; 1910A; 2010) mit einem konstanten Querschnitt an einer Außenwand eines Gebäudes, wobei die wenigstens eine Tafel eine erste Mehrzahl von Leitungen (308) aufweist, die jeweils durch eine jeweilige der wenigstens einen Tafeln verlaufen;
Montieren eines ersten Verteilers (1950; 2050) in Fluidverbindung mit der ersten Mehrzahl von Leitungen; und
Montieren eines zweiten Verteilers (2050) in Fluidverbindung mit der ersten Mehrzahl von Leitungen, wobei
jede der wenigstens einen Tafeln aufweist:
eine erste Hauptfläche (311); und
eine zweite Hauptfläche (312), die der ersten Hauptfläche gegenüberliegt, wobei
eine Umfangskontur der Tafel mit Ausnahme eines ersten ausgesparten Abschnitts (320) entlang eines ersten Rands der ersten Hauptfläche und eines zweiten ausgesparten Abschnitts (330) entlang eines zweiten Rands der zweiten Hauptfläche, der dem ersten Rand diagonal gegenüberliegt, im Wesentlichen eine Form eines rechteckigen Quaders aufweist, und
der erste und der zweite ausgesparte Abschnitt Gegenstücke (322, 333) eines Eingriffsmechanismus definieren, der die seitliche Bewegung der Tafel von einer anderen Tafel weg verhindert, wenn der erste ausgesparte Abschnitt mit dem zweiten ausgesparten Abschnitt der anderen Tafel in gegenstückigem Eingriff ist.

14. Verfahren nach Anspruch 13, das aufweist:
Positionieren einer anderen wenigstens einen Tafel mit einem konstanten Querschnitt an der Außenwand, wobei die andere wenigstens eine Tafel eine zweite Mehrzahl von Leitungen (2008) aufweist, die jeweils durch eine jeweilige der wenigstens einen anderen Tafeln verlaufen; und
Montieren des ersten Verteilers in der Weise, dass dieser mit der zweiten Mehrzahl von Leitungen in Fluidverbindung steht.

## Revendications

1. Un système de conduits de fluide (1900, 2000), comprenant :
au moins un panneau (310, 1910A, 2010, 2210) ayant une section transversale constante,
une première pluralité de conduits (308, 1908A, 2008), chacun s'étendant à travers l'un desdits au moins un panneau,
un premier collecteur (1950, 2050) en liaison fluidique avec ladite première pluralité de conduits et
un second collecteur (2050) en liaison fluidique avec ladite première pluralité de conduits,
chacun desdits au moins un panneau comprenant :
une première face principale (311) et
une deuxième face principale (312) opposée à ladite première face principale, **caractérisé en ce que** :
une esquisse périphérique dudit panneau a substantiellement la forme d'un cuboïde rectangulaire, hormis une première partie évidée (320) le long d'un premier bord de ladite première face principale et une deuxième partie évidée (330) le long d'un deuxième bord de ladite deuxième face principale diagonalement opposée audit premier bord et
lesdites première et deuxième parties évidées définissant des contreparties (322, 333) d'un mécanisme d'enclenchement qui inhibe le mouvement latéral dudit panneau en l'éloignant d'undit autre panneau lorsque ladite première partie évidée est en enclenchement de contrepartie avec ladite deuxième partie évidée dudit autre panneau.

2. Le système de conduits de fluide de la revendication 1 :
ledit au moins un panneau (2210) comprenant une première structure d'enclenchement (2244) dans, à ou sur ladite première surface principale.

3. Le système de conduits de fluide de la revendication 2 :
ledit au moins un panneau comprenant une première partie élastique (2297) dans une zone de ladite première structure d'enclenchement (2244).

4. Le système de conduits de fluide de la revendication 2 ou 3, comprenant :
un élément de montage (2270A, 2270B) comprenant une deuxième structure d'enclenchement (2272) ayant une forme qui s'enclenche dans ladite première structure d'enclenchement (2244).

5. Le système de conduits de fluide de la revendication 4 :
ledit élément de montage (2270A, 2270B) comprenant une deuxième partie élastique dans une zone de ladite deuxième structure d'enclenchement (2272).

6. Le système de conduits de fluide de la revendication 4 ou 5 :
ladite deuxième structure d'enclenchement (2272) ayant une forme qui s'enclenche par encliquetage dans ladite première structure d'enclenchement (2244).

7. Le système de conduits de fluide de la revendication 6 :
au moins l'une de ladite première structure d'enclenchement et de ladite deuxième structure d'enclenchement étant d'une forme qui utilise une élasticité de la première / deuxième partie élastique pour ledit enclenchement par encliquetage.

8. Le système de conduits de fluide de l'une des revendications 4 à 7 :
ledit élément de montage (2270A, 2270B) ayant une section transversale constante.

9. Le système de conduits de fluide de l'une des revendications 4 à 8 :
ledit élément de montage (2270A, 2270B) comprenant une partie de base en forme de plaque.

10. Le système de conduits de fluide de l'une des revendications précédentes, comprenant :
un cache (1980) comprenant une surface principale (1981) coplanaire par rapport à une surface principale (1901A, 1901B) d'au moins un dudit au moins un panneau.

11. Le système de conduits de fluide de la revendication 10 :
ledit cache (1980) comprenant un mécanisme de fixation à fermeture rapide qui se fixe sur ledit premier collecteur (1950, 2050).

12. Une structure comprenant :
un système de conduits de fluide de l'une des revendications précédentes, positionné sur une paroi extérieure de ladite structure.

13. Une méthode d'assemblage d'un système de conduits de fluide (1900, 2000), comprenant :
le positionnement d'au moins un panneau (300, 1910A, 2010) ayant une section transversale constante sur une paroi extérieure d'une structure, ledit au moins un panneau comprenant une première pluralité de conduits (308), chacun s'étendant à travers l'un desdits au moins un panneau,
l'assemblage d'un premier collecteur (1950, 2050) en liaison fluidique avec ladite première pluralité de conduits et
l'assemblage d'un deuxième collecteur (2050) en liaison fluidique avec ladite première pluralité de conduits,
chacun desdits au moins un panneau comprenant :
une première face principale (311) et
une deuxième face principale (312) opposée à ladite première face principale,
une esquisse périphérique dudit panneau ayant substantiellement la forme d'un cuboïde rectangulaire, hormis une première partie évidée (320) le long d'un premier bord de ladite première face principale et une deuxième partie évidée (330) le long d'un deuxième bord de ladite deuxième face principale diagonalement opposée audit premier bord et
lesdites première et deuxième parties évidées définissant des contreparties (322, 333) d'un mécanisme d'enclenchement qui inhibe le mouvement latéral dudit panneau en l'éloignant d'undit autre panneau lorsque ladite première partie évidée est en enclenchement de contrepartie avec ladite deuxième partie évidée dudit autre panneau.

14. La méthode de la revendication 13, comprenant :
le positionnement d'un autre au moins un panneau ayant une section transversale constante sur ladite paroi extérieure, ledit autre au moins un panneau comprenant une deuxième pluralité de conduits (2008), chacun s'étendant à travers l'un desdits au moins un autre panneau et
l'assemblage dudit premier collecteur en liaison fluidique avec ladite deuxième pluralité de conduits.
